# EUROPEAN PATENT APPLICATION

(11) **EP 4 391 332 A1**
(43) Date of publication of application: **26.06.2024**
(21) Application number: 22858203.7
(22) Date of filing: 08.07.2022
(51) Int. Cl.: H02K 21/16, H02K 1/2706

(54) **ROTOR, MOTOR USING SAID ROTOR, AND ELECTRONIC DEVICE**

(30) Priority: 17.08.2021 JP 2021132554
(71) Applicant: Minebea Mitsumi Inc., Kitasaku-gun, Nagano 3890293 (JP)
(72) Inventor: YAMADA, Takuji, Kitasaku-gun, Nagano 389-0293 (JP); KEBUKAWA, Kouji, Kitasaku-gun, Nagano 389-0293 (JP); WATANABE, Toru, Kitasaku-gun, Nagano 389-0293 (JP); TOYOMURA, Naoto, Kitasaku-gun, Nagano 389-0293 (JP)
(74) Representative: Zabel, Julia Elisabeth
(86) International application number: PCT/JP2022/027069
(87) International publication number: WO 2023/021880

(57) **Abstract**

Provided are a rotor capable of effectively utilizing the magnetic flux generated by a magnet, a motor using the rotor, and an electronic device. The rotor comprises a plurality of magnetic bodies (33x, 33y) stacked in the axial direction and a plurality of magnets, wherein: the magnetic bodies (33x, 33y) have an annular portion (33a), a plurality of magnetic pole pieces (33b) extending in the radial direction (cd), and a plurality of connection portions (33cx, 33cy) for connecting between the respective plurality of magnetic pole pieces (33b) and the annular portion (33a); the plurality of magnets are disposed in the circumferential direction (ef) between adjacent two magnetic pole pieces (33b) of the plurality of magnetic pole pieces (33b); and the connection portions (33cx, 33cy) extend having both a component in the radial direction (cd) and a component in the circumferential direction (ef).

## Description

### Technical Field

The present invention relates to a rotor, a motor using the rotor, and an electronic device.

### Background Art

Conventionally, motors are used for a drive source in various devices. There are various types of motors, and each type of motor is selected in accordance with use purposes or situations. Among these motors, an interior permanent magnet (IPM) motor actively utilizing reluctance torque is highly efficient and can achieve high torque. The IPM motor is disclosed, for example, in PTL 1.

In the IPM motor, when a short circuit of magnetic flux occurs inside the rotor, the average magnetic flux density decreases, thus causing a reduction in efficiency. Thus, in a case of the spoke type IPM motor, a void is formed in the rotor core to form a flux barrier and direct the magnetic flux more to a stationary part as much as possible, thereby improving the efficiency of operation.

In the technique described in PTL 1, magnetic pole pieces disposed radially at a rotor core are in a state of being supported at an annular part of the rotor core center by coupling parts between adjacent flux barriers. The coupling part is required to have a certain thickness to ensure strength. However, since the coupling part serves as a magnetic path to the annular part of the rotor core center, when the magnetic flux leaks to the annular part via the coupling part, ineffective magnetic flux occurs. The large magnetic path of the coupling part increases the ineffective magnetic flux, leading to a decrease in motor efficiency.

### Citation List

### Patent Literature

PTL 1: JP 2015-177721 A

### Summary of Invention

### Technical Problem

Accordingly, the present invention has been made in view of the background described above, and an object of the present invention is to provide a rotor making it possible to effectively utilize magnetic flux generated from a magnet, a motor using the rotor, and an electronic device.

### Solution to Problem

The above problem is solved by the present invention described below. That is, a rotor of the present invention includes a plurality of magnetic bodies and a plurality of magnets. The plurality of magnetic bodies are stacked in an axial direction. The magnetic body includes: an annular part; a plurality of magnetic pole pieces extending in a radial direction; and a plurality of coupling parts configured to couple each of the plurality of magnetic pole pieces and the annular part. The plurality of magnets are each disposed between two adjacent magnetic pole pieces among the plurality of magnetic pole pieces in a circumferential direction. The coupling part extends with both components including a component in the radial direction and a component in the circumferential direction.

### Brief Description of Drawings

FIG. 1 is a vertical cross-sectional view of a motor using a rotor according to a first embodiment being one example of the present invention, and is a cross-sectional view taken along B-B in FIG. 2.
FIG. 2 is a horizontal cross-sectional view of the motor using the rotor according to the first embodiment being one example of the present invention, and is a cross-sectional view taken along A-A in FIG. 1.
FIG. 3 is a perspective view of a rotor core in the rotor according to the first embodiment being one example of the present invention.
FIG. 4 is a plan view of a first magnetic body employed in the rotor core in the rotor according to the first embodiment being one example of the present invention.
FIG. 5 is a plan view of a second magnetic body employed in the rotor core in the rotor according to the first embodiment being one example of the present invention.
FIG. 6 is an exploded perspective view of the rotor core in the rotor according to the first embodiment being one example of the present invention.
FIG. 7 is a perspective view of a rotor core in a rotor according to a second embodiment being one example of the present invention.
FIG. 8 is a plan view of a first magnetic body employed in the rotor core in the rotor according to the second embodiment being one example of the present invention.
FIG. 9 is a plan view of a second magnetic body employed in the rotor core in the rotor according to the second embodiment being one example of the present invention.
FIG. 10 is an exploded perspective view of the rotor core in the rotor according to the second embodiment being one example of the present invention.
FIG. 11 is a perspective view of a rotor core in a rotor according to a third embodiment being one example of the present invention.
FIG. 12 is a plan view of a first magnetic body employed in the rotor core in the rotor according to the third embodiment being one example of the present invention.
FIG. 13 is a plan view of a second magnetic body employed in the rotor core in the rotor according to the third embodiment being one example of the present invention.
FIG. 14 is an exploded perspective view of the rotor core in the rotor according to the third embodiment being one example of the present invention.
FIG. 15 is a perspective view of a rotor core in a rotor according to a fourth embodiment being one example of the present invention.
FIG. 16 is a plan view of first and second magnetic bodies employed in the rotor core in the rotor according to the fourth embodiment being one example of the present invention.
FIG. 17 is an exploded perspective view of the rotor core in the rotor according to the fourth embodiment being one example of the present invention.
FIG. 18 is a perspective view of a rotor core in a rotor according to a fifth embodiment being one example of the present invention.
FIG. 19 is a plan view of first and second magnetic bodies employed in the rotor core in the rotor according to the fifth embodiment being one example of the present invention.
FIG. 20 is an exploded perspective view of the rotor core in the rotor according to the fifth embodiment being one example of the present invention.
FIG. 21 is a perspective view of a rotor core in a rotor according to a sixth embodiment being one example of the present invention.
FIG. 22 is a plan view of first and second magnetic bodies employed in the rotor core in the rotor according to the sixth embodiment being one example of the present invention.
FIG. 23 is an exploded perspective view of the rotor core in the rotor according to the sixth embodiment being one example of the present invention.
FIG. 24 is a perspective view of a rotor core in a rotor according to a seventh embodiment being one example of the present invention.
FIG. 25 is a plan view of first and second magnetic bodies employed in the rotor core in the rotor according to the seventh embodiment being one example of the present invention.
FIG. 26 is an exploded perspective view of the rotor core in the rotor according to the seventh embodiment being one example of the present invention.

### Description of Embodiments

First to seventh embodiments being exemplary aspects of the present invention will be described below with reference to the drawings.

### First Embodiment

A rotor according to the first embodiment being one example of the present invention will be described below.

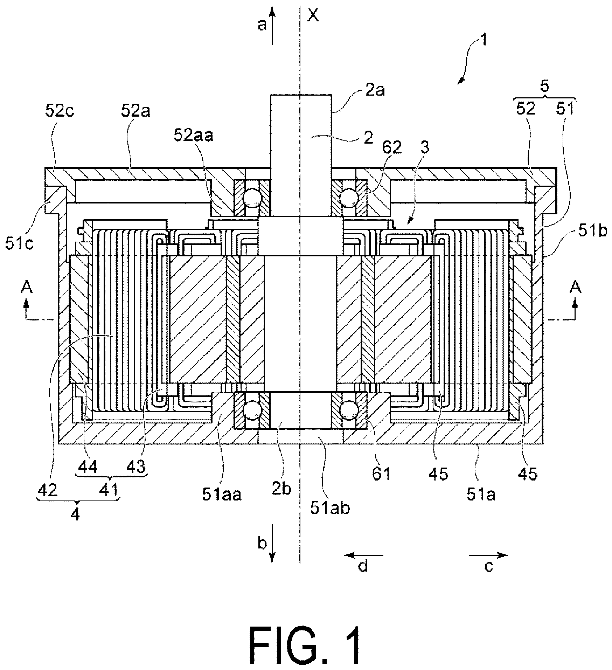

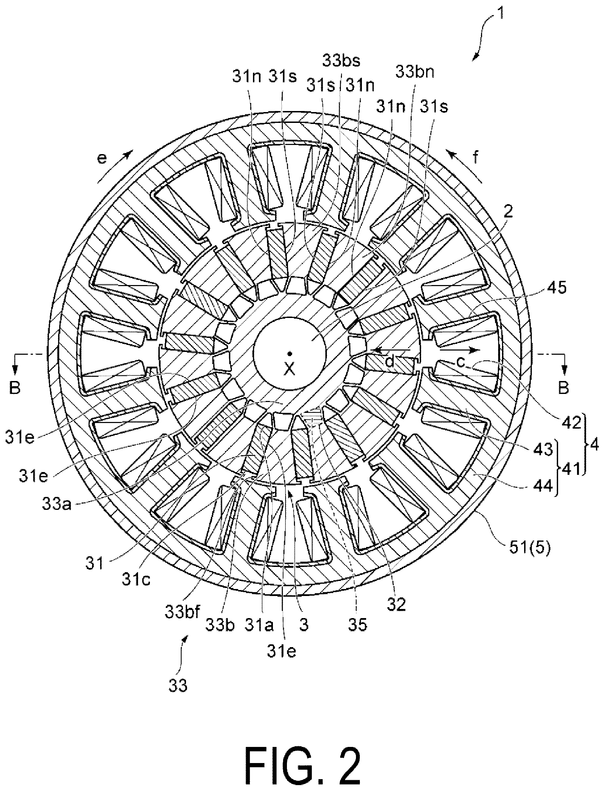

FIG. 1 is a vertical cross-sectional view of a motor 1 using a rotor 3 according to the first embodiment. FIG. 2 is a horizontal cross-sectional view. FIG. 1 corresponds to the B-B cross-sectional view in FIG. 2. FIG. 2 corresponds to the A-A cross-sectional view in FIG. 1.

Note that in a description of the present embodiment, an "upper side" and a "lower side" refer to an up and down relationship in FIG. 1, and do not necessarily correspond to an up and down relationship in the gravitational direction.

Furthermore, in a direction of an axial line X (hereinafter also referred to as an "axial direction"), a direction of an arrow a is an upper side a, and a direction of an arrow b is a lower side b. Further, in a direction perpendicular to the axial line X (hereinafter also referred to as a "radial direction"), a direction away from the axial line X (a direction of an arrow c) is an outer peripheral side c, and a direction toward the axial line X (a direction of an arrow d) is an inner circumferential side d. Then, a clockwise direction in a circumferential direction (a circumferential direction viewed from the upper side a) centered about a rotation axis X is a circumferential direction e, and the counterclockwise direction is a circumferential direction f.

As for definitions and signs regarding the directions, the same applies to the subsequent embodiments.

The motor 1 according to the present embodiment is one type of inner-rotor type brushless motor, and is a spoke type IPM motor.

The IPM motor is configured such that a magnet is embedded in a rotor, and is also referred to as an embedded magnet type motor. There are various types of IPM motors, and a known spoke type IPM motor has a magnet having a rectangular cross section, and the longitudinal direction of the magnet is radially disposed in a rotor core. In the spoke type motor, a surface of the longer side serves as a magnetic pole, and opposing magnetic pole faces of adjacent magnets in the circumferential direction have the same magnetic pole.

The motor 1 includes a shaft 2 serving as a rotation shaft, the rotor 3, stators 4, and a housing 5. The rotor 3 is formed by disposing magnets 31 in a rotor core 33 formed of a magnetic body, and is fixed to the shaft 2 so as to rotate together. The stators 4 are formed by winding coils 42 around stator cores 41 formed of a magnetic body, and are disposed so as to surround the rotor 3.

The housing 5 accommodates all or part of the components of the motor 1 such as the rotor 3 and the stator 4, and includes a housing body 51 fixed to the stator 4, and a cover 52 covering an opening provided at the upper part of the housing body 51. The housing body 51 includes a bottom part 51a including a protruding part 51aa, a tube part 51b, and an outer peripheral part 51c. The cover 52 includes an annular flat plate part 52a including a protruding part 52aa, and an outer peripheral part 52c. The protruding part 52aa of the cover 52 is provided at the flat plate part 52a, and protrudes in a direction (lower side b) toward the rotor 3 in a longitudinal direction (direction of the axial line X) of the shaft 2. The outer peripheral part 51c of the housing body 51 and the outer peripheral part 52c of the cover 52 are fixed (fastened) to shield the inside of the housing 5 from the outside, and the motor 1 is completed.

The motor 1 is provided with a plurality (two in the present embodiment) of bearings 61 and 62 rotatably supporting the shaft 2 relative to the housing 5. One bearing 61 of the plurality of bearings 61 and 62 is provided at the bottom part 51a of the housing body 51. The protruding part (hereinafter referred to as a "bearing housing") 51aa and a hole part 51ab are provided at the bottom part 51a of the housing body 51 supporting the bearing 61. The protruding part 51aa protrudes in a direction (upper side a) toward the rotor 3 in the longitudinal direction (direction of the axial line X) of the shaft 2. The bearing 61 is fixed to the bearing housing 51aa through press fitting or the like. The other bearing 62 is fixed to the protruding part (hereinafter, referred to as a "bearing housing") 52aa of the cover 52 through press fitting or the like. In the radial direction, the outer diameter and the inner diameter of the bearing 61 and the outer diameter and the inner diameter of the bearing 62 are substantially equal.

Note that, although the outer diameter and the inner diameter of the one bearing 61 and the outer diameter and the inner diameter of the other bearing 62 are substantially equal, the outer diameter or the inner diameter of or both of these diameters of the other bearing 62 may be larger than the outer diameter or the inner diameter of or both of these diameters of the one bearing 61. Further, the hole part 5 1ab need not be provided at the bottom part 51a.

The shaft 2 includes two end parts 2a, 2b. One end part 2b at the housing body 51 side is rotatably supported relative to the housing body 51 by the one bearing 61, and the other end part 2a at the cover 52 side is rotatably supported by the other bearing 62. Thus, the shaft 2 is rotatably fixed to the housing body 51 via the bearing 61 and the cover 52 via the bearing 62, respectively, and one end part 2b of the shaft 2 protrudes from the cover 52. Rotating force can be extracted from the one end part 2a of the shaft 2 to the outside. The shaft 2 is fixed to the rotor 3, and as the rotor 3 rotates due to electromagnetic effect between the stator 4 and the rotor 3, the shaft 2 rotates together with the rotor 3.

The stator 4 includes the stator core 41 including a teeth part 43, and the coil 42.

The stator core 41 is a stacked body of a magnetic body, such as silicon steel plate, and includes an annular part (hereinafter referred to as a "circular ring part") 44 disposed coaxially with the shaft 2, and a plurality of magnetic pole parts (hereinafter referred to as the "teeth parts") 43 formed so as to extend toward the shaft 2 side from the circular ring part 44.

The coil 42 is wound around each of the plurality of teeth parts 43. The stator core 41 and the coil 42 are isolated from each other by an insulator 45 made of an insulation material.

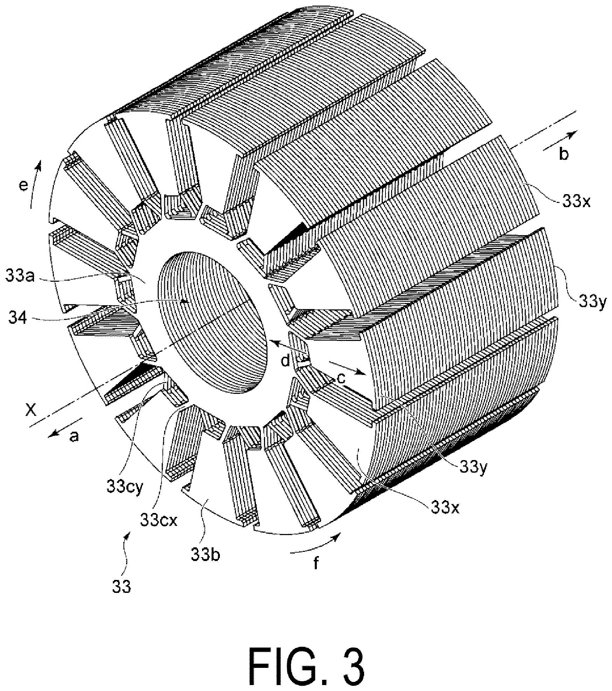

Next, the rotor 3 according to the present embodiment will be described in detail. FIG. 3 illustrates a perspective view of the rotor core 33 as one component of the rotor 3 according to the present embodiment.

The rotor core 33 is formed of a stacked body of a plurality of magnetic bodies. Specifically, the plurality of magnetic bodies include a plurality of first magnetic bodies 33x and a plurality of second magnetic bodies 33y. The first and second magnetic bodies 33x, 33y are very thin sheets made of metal, such as iron.

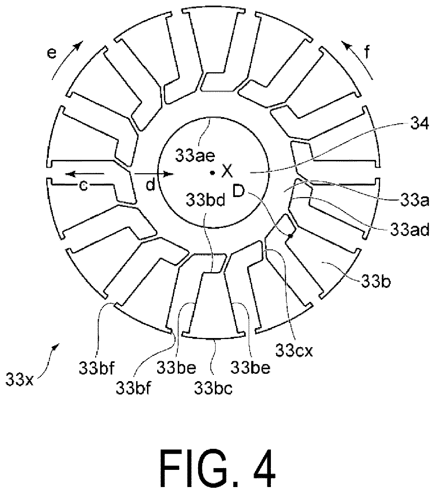

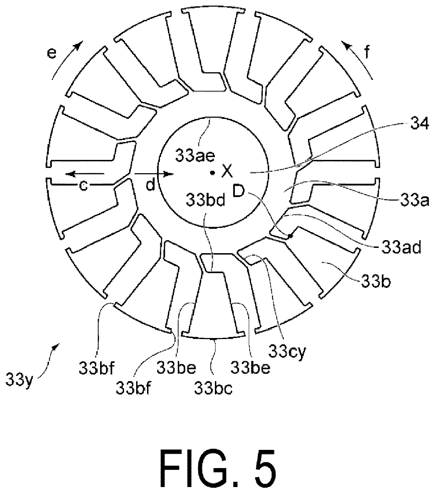

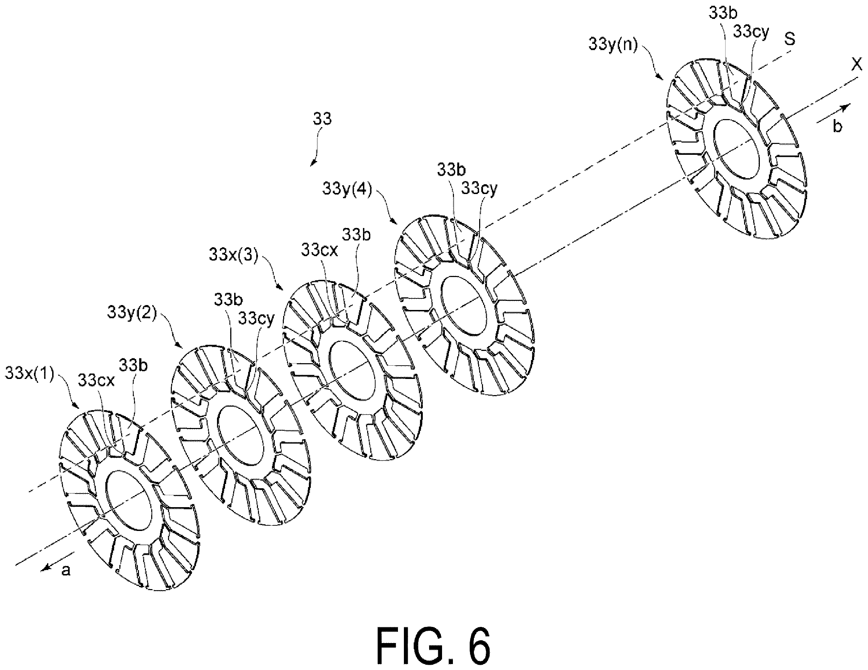

FIG. 4 illustrates a plan view of the first magnetic body 33x employed in the rotor core 33. FIG. 5 illustrates a plan view of the second magnetic body 33y employed in the rotor core 33. In FIGS. 4 and 5, the front surface sides of the paper surfaces of these drawings are the upper side a in FIG. 1. Further, FIG. 6 illustrates an exploded perspective view of the rotor core 33 in the rotor 3 according to the present embodiment.

As illustrated in FIGS. 4 and 5, the first magnetic body 33x and the second magnetic body 33y after inverted have the same shape. Hereinafter, the shapes of the first and second magnetic bodies 33x, 33y will be described in detail.

As illustrated in FIGS. 4 and 5, the first and second magnetic bodies 33x, 33y have hole parts 34. The shaft 2 is inserted into the hole parts 34.

The first and second magnetic bodies 33x, 33y include: annular parts 33a including the hole parts 34 at the center parts; a plurality (14 pieces in the present embodiment) of magnetic pole pieces 33b formed radially in the radial direction toward the stators 4 with base points D at positions spaced apart from outer peripheral edges 33ad of the annular part 33a; and coupling parts 33cx, 33cy coupling end parts at the base point D sides (inner peripheral parts 33bd described later) of the respective plurality of magnetic pole pieces 33b and the outer peripheral edges 33ad of the annular part 33a. The plurality of magnetic pole pieces 33b extend radially in the radial direction from the annular part 33a via the coupling parts 33cx, 33cy toward the outer peripheral side c (stators 4). Note that the annular part 33a includes the outer peripheral edges 33ad and an inner peripheral edge 33ae forming the hole part 34.

Each of the plurality of magnetic pole pieces 33b includes: an outer peripheral part 33bc; the inner peripheral part 33bd at the annular part 33a side; two side edges 33be opposed to side surfaces (31e) of magnets 31 (described later) in a circumferential direction ef; and a plurality of protruding parts 33bf. The protruding parts 33bf protrude in the circumferential direction ef toward another adjacent magnetic pole piece 33b. Of two adjacent magnetic pole pieces 33b in the circumferential direction ef, the protruding part 33bf of one magnetic pole piece 33b and the protruding part 33bf of the other magnetic pole piece 33b are opposed to each other, and are spaced apart from each other so as to form a predetermined gap.

As illustrated in FIG. 4, the coupling part 33cx of the first magnetic body 33x is at an upstream side in a clockwise direction e in the inner peripheral part 33bd of the magnetic pole piece 33b in the circumferential direction ef. The coupling part 33cx extends in an oblique direction with respect to a radial direction cd and couples the outer peripheral edge 33ad of the annular part 33a and the inner peripheral part 33bd of the magnetic pole piece 33b. That is, the coupling part 33cx extends with both components of the component in the radial direction cd and the component in the circumferential direction ef.

Note that the "both components of the component in the radial direction and the component in the circumferential direction" used herein conceptually include a case where the extending direction of the coupling part can be decomposed into the component in the radial direction and the component in the circumferential direction, similarly to the concept of decomposing a vector into components in two directions as in the present embodiment. "Both components of the component in the radial direction and the component in the circumferential direction" include not only the concept as in the present embodiment, but also other concepts, and the details will be described in a third embodiment described later.

On the other hand, as illustrated in FIG. 5, the coupling part 33cy of the second magnetic body 33y is at a downstream side in the clockwise direction e of the inner peripheral part 33bd in the circumferential direction ef. The coupling part 33cy extends in an oblique direction with respect to the radial direction cd and couples the outer peripheral edge 33ad of the annular part 33a and the inner peripheral part 33bd of the magnetic pole piece 33b. That is, the coupling part 33cy extends with both of the component in the radial direction cd and the component in the circumferential direction ef.

In the present embodiment, a ratio (cd/ef) of the component (cd) in the radial direction cd in the extending direction of the coupling parts 33cx, 33cy to the component (ef) in the circumferential direction ef is √3 (that is, cd/ef = √3/1). This means that angles θ formed by tangents of the inner peripheral parts 33bd to an arc at the coupling points of the coupling part 33cx, cy with the inner peripheral part 33bd of the magnetic pole piece 33b and the extending directions of the coupling parts 33cx, 33cy are 60°. It is only necessary to select the formed angle θ from a range of approximately from 45° to 75°, and it is preferable to make selection from a range of approximately from 55° to 70°.

Strictly speaking, the "component in the circumferential direction" is a curved component drawing an arc, but in addition to the curved component, a linear component like a tangent to the arc in the circumferential direction at or near the coupling point between the inner peripheral part of the magnetic pole piece and the coupling part is also included in the concept of the "component in the circumferential direction". The same applies to the subsequent embodiments.

Note that, as can be seen from FIG. 3, the extending direction of the coupling part 33cx of the first magnetic body 33x is different from the extending direction of the coupling part 33cy of the second magnetic body 33y. Specifically, both of the coupling part 33cx and the coupling part 33cy extend in the oblique directions with respect to the radial directions cd such that a distance between the coupling points with the inner peripheral parts 33bd of the magnetic pole pieces 33b is shorter than a distance between the coupling points with the outer peripheral edges 33ad of the annular part 33a.

As illustrated in FIG. 6, in the rotor core 33, a total of n pieces (layers) of both of the first magnetic bodies 33x and the second magnetic bodies 33y are alternately overlapped and stacked one by one. In FIG. 6, the numbers in parentheses given after the reference numerals 33x, 33y indicate the number of layers from the upper side a in the stacked respective first and second magnetic bodies 33x, 33y. Note that the same applies to numbers in parentheses in exploded views in the subsequent embodiments.

As illustrated in FIG. 6, in the rotor core 33, the odd-numbered layers including the first layer and the third layer are the first magnetic bodies 33x, the even-numbered layers including the second layer and the fourth layer are the second magnetic bodies 33y, the fifth layer to the (n-1)-th layer are not illustrated, and the lowermost n-th layer is the second magnetic body 33y.

The number of stacked magnetic bodies n in the rotor core 33 is an even number, and the half is each of the first magnetic bodies 33x and the second magnetic bodies 33y.

In FIG. 6, a broken line S drawn parallel to the axial line X is an auxiliary line, and is drawn so as to pass through the same position (substantially the center) of the magnetic pole pieces 33b in a plan view (the same viewpoint as FIGS. 4 and 5) when the respective first and second magnetic bodies 33x, 33y are stacked. Hereinafter, the broken line S is described as an "auxiliary line S". Note that the same applies to the broken lines S in the exploded views in the subsequent embodiments.

As can be seen from the magnetic pole pieces 33b for the auxiliary line S to pass through in FIG. 6, the coupling parts 33cx and the coupling parts 33cy are alternately coupled in the magnetic pole pieces 33b in the stacking direction. As illustrated in FIG. 3, in the rotor core 33 obtained by stacking the first and second magnetic bodies 33x, 33y, the stacked body of the magnetic pole pieces 33b and the stacked body of the annular parts 33a are in a state of being coupled by the coupling parts 33cx and the coupling parts 33cy.

As illustrated in FIG. 2, the magnets 31 are disposed between the respective magnetic pole pieces 33b, 33b adjacent to one another in the circumferential direction ef. The plurality of magnets 31 extend radially from the annular part 33a in the radial direction cd.

In the magnet 31, the two side surfaces 31e intersecting with the radial direction cd are a magnetic pole face 31n indicating an N-pole and a magnetic pole face 31s indicating an S pole. These magnetic pole faces 31n, 31s are in a state of being in contact with the side edges 33be of the magnetic pole pieces 33b.

The magnet 31 includes: an outer surface 31c opposed to the protruding part 33bf of the magnetic pole piece 33b in the radial direction cd; an inner surface 31a at the annular part 33a side in the radial direction cd; and the two side surfaces 31e opposed to the magnetic pole pieces 33b in the circumferential direction ef. The magnetic pole faces 31n, 31s correspond to the two side surfaces 31e.

The description will be given focusing on two magnetic pole pieces 33bn, 33bs interposed between the magnets 31 having the side surfaces 31e denoted by the reference numerals of the magnetic pole faces 31s, 31n among the plurality of magnetic pole pieces 33b in FIG. 2.

In the circumferential direction ef, among the two side edges 33be, 33be provided in one magnetic pole piece 33b, the magnetic pole of the magnet 31 at one side edge 33be side and the magnetic pole of the magnet 31 at the other side edge 33be side have the same magnetic pole.

In detail, at the magnetic pole piece 33bn at the downstream side in the clockwise direction e, all of the two magnetic pole faces 31n, 31n of the magnets 31 in contact with the two side edges 33be, 33be in the circumferential direction ef have the N-poles.

On the other hand, at the magnetic pole piece 33bs at the upstream side in the clockwise direction e, all of the two magnetic pole faces 31s, 31s of the magnets 31 in contact with the two side edges 33be, 33be in the circumferential direction ef have the S-poles.

That is, at a certain one magnetic pole piece 33b, the respective magnets 31 are disposed such that the two magnetic pole faces 31n, 31n or 31s, 31s of the magnets 31 in contact with the two side edges 33be, 33be in the circumferential direction ef have the same magnetic pole.

Magnetic force of the N-pole or S-pole is applied to the magnetic pole piece 33b to form one magnetic flux, and is released to the outside in the radial direction cd. The magnetic pole of the magnetic pole piece 33b is configured such that the N-pole and the S-pole are alternately repeated in the circumferential direction ef.

For example, at the magnetic pole piece 33bn, magnetic flux coming out of the two magnetic pole faces 31n of the magnet 31 long in the radial direction cd of the rotor 3 forms a bundle, and is directed from the inner circumferential side d toward the outer peripheral side c in the radial direction cd. Then, the magnetic flux is released from an end part (outer peripheral part 33bc) at the opposite side from the base point D side (annular part 33a side) of the magnetic pole piece 33bn, and acts on the stator 4.

In addition, a gap 32 is formed extending in the direction of the axial line X surrounded by the coupling part 33cx of the first magnetic body 33x, the coupling part 33cy of the second magnetic body, the inner peripheral part 33bd of each of the magnetic pole pieces 33b, and the outer peripheral edge 33ad of the annular part 33a (see FIG. 2). The gap 32 functions as a flux barrier.

At both sides of the gap 32 functioning as the flux barrier, there are the coupling part 33cx and the coupling part 33cy. When the coupling part 33cx and the coupling part 33cy serve as magnetic paths and the magnetic flux generated from the magnetic pole faces 31n, 31s of the magnets 31 leaks to the annular part 33a, magnetic flux not contributing to a torque (hereinafter referred to as "ineffective magnetic flux") occurs in some cases. When the ineffective magnetic flux increases, the magnetic force acting on the stator 4 weakens, leading to a decrease in motor efficiency.

However, in the present embodiment, the coupling parts 33cx and the coupling parts 33cy are included in the respective first magnetic bodies 33x and second magnetic bodies 33y alternately stacked. The coupling parts 33cx and the coupling parts 33cy are at different positions in the circumferential direction ef. Therefore, the respective coupling parts 33cx and coupling parts 33cy are not in contact in the stacking direction (same as the direction of the axial line X, hereinafter the same applies when referred to as the "stacking direction") and are separated by one magnetic body (one layer).

That is, the number of stacked magnetic bodies (the number of layers) of each of the coupling parts 33cx and the coupling parts 33cy is the number smaller than and the half of the number of stacked magnetic bodies (the number of layers) n in the magnetic pole piece 33b, and magnetic paths becoming ineffective magnetic flux are significantly reduced. In addition, since the coupling part 33cx and the coupling part 33cy are divided into very thin film magnetic paths in the stacking direction, a leakage of magnetic flux to the annular part 33a is less likely to occur. Therefore, according to the present embodiment, since the ineffective magnetic flux can be reduced and the effective magnetic flux can be increased, the magnetic flux generated from the magnet 31 can be effectively utilized.

According to the present embodiment, the magnetic flux generated from the magnets 31 can be effectively utilized, and therefore the amount of magnet used can be reduced and cost reduction, weight reduction, and size reduction of the motor 1 can be achieved.

Alternatively, with the present embodiment, it is possible to provide a motor having high efficiency and high performance, without reducing or significantly reducing the amount of magnet used, as compared with the conventional configuration.

In addition, although the total thicknesses of the coupling parts 33cx and the coupling parts 33cy in the stacking direction (including the gaps between the layers) are substantially the same as in the case of one coupling part, the number of coupling parts is two, and the mechanical strength of the rotor core 33 is high.

In the present embodiment, by extending the coupling parts 33cx and the coupling parts 33cy in the oblique direction, it is possible to extend the length of the coupling parts 33cx and the coupling parts 33cy serving as magnetic paths to allow increasing the magnetic resistance to the leakage magnetic flux.

In addition, in the present embodiment, since the first magnetic bodies 33x and the second magnetic bodies 33y alternately stacked have the same shape of the fronts and the backs being merely inverted to one another, it is possible to manufacture the rotor core 33 using only one component (magnetic body). Therefore, according to the present embodiment, it is possible to suppress an increase in the number of components and suppress an increase in the manufacturing cost of the motor.

Note that a second magnet 35 indicated by the broken line in FIG. 2 may be disposed at each of the gaps 32. FIG. 2 illustrates that the second magnet 35 is disposed at one gap 32. In the case of the modification example, the second magnet 35 is disposed such that the surface in contact with the inner peripheral part 33bd of the magnetic pole piece 33b exhibits the same magnetic pole as the magnetic poles of the magnetic pole faces 31n, 31s of the magnet 31 in contact with the two side edges 33be of the magnetic pole piece 33b. That is, for example, the second magnet 35 in contact with the inner peripheral part 33bd of the magnetic pole piece 33bn in FIG. 2 is disposed such that the surface in contact with the inner peripheral part 33bd indicates the N-pole same as the magnetic pole of the magnetic pole face 31n of the magnet 31 in contact with the two side edges 33be of the magnetic pole piece 33bn.

In the case of the modification example, since the portion of the second magnet 35 being disposed is surrounded by the coupling part 33cx of the first magnetic body 33x, the coupling part 33cy of the second magnetic body 33y, the inner peripheral part 33bd of each of the magnetic pole pieces 33b, and the outer peripheral edge 33ad of the annular part 33a, it is possible to suppress falling off of the second magnet 35.

Although the modification examples described above are similarly applicable in other embodiments described below, the description is omitted in the other embodiments.

As described above, the motor 1 using the rotor 3 according to the present embodiment can be used as a drive device of a moving body, such as an electric vehicle, an electronic device used in a home, such as a compressor of an air conditioning device (air conditioner), or a rotary drive device of other various electronic devices. In particular, the motor 1 can be preferably used in applications requiring high power, high torque, energy saving, space saving, and the like.

Although the application of the motor as described above is similar in the other embodiments described below, the description is omitted in the other embodiments.

### Second Embodiment

A rotor according to the second embodiment being one example of the present invention will be described below.

The rotor according to the second embodiment is different from the rotor 3 according to the first embodiment only in a configuration of a rotor core. In the motor 1 illustrated in FIGS. 1 and 2 described in the first embodiment, the rotor according to the present embodiment can be used instead of the rotor 3. Therefore, reference should be made to the motor 1 illustrated in FIGS. 1 and 2 and the description in the first embodiment for the details of the entire configuration, the operation, the application, and the like of the motor using the rotor according to the present embodiment.

The present embodiment is entirely the same as the first embodiment except that a rotor core 233 described below is used instead of the rotor core 33 in the rotor 3 according to the first embodiment. Therefore, for the configuration in the rotor other than the rotor core, reference should be made to the description of the rotor 3 according to the first embodiment.

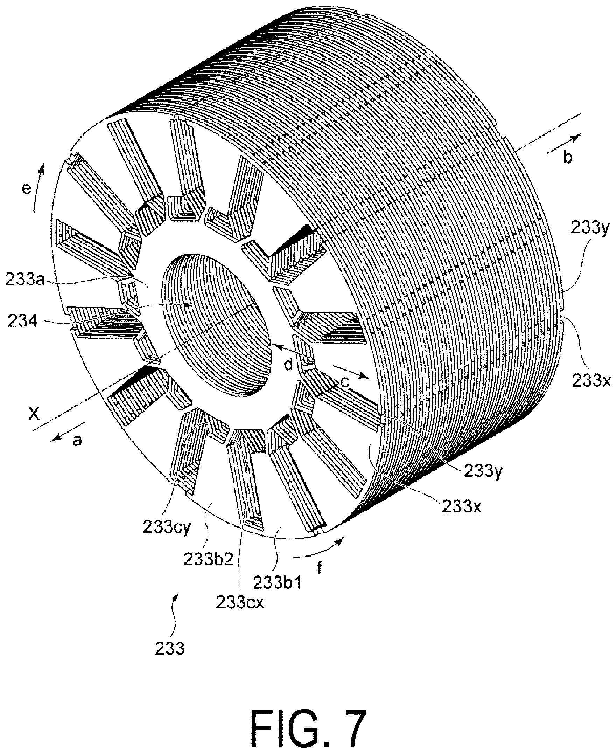

FIG. 7 illustrates a perspective view of the rotor core 233 as one component of the rotor according to the present embodiment.

The rotor core 233 is formed of a stacked body of a plurality of magnetic bodies. Specifically, the plurality of magnetic bodies include a plurality of first magnetic bodies 233x and a plurality of second magnetic bodies 233y. The first and second magnetic bodies 233x, 233y are very thin sheets made of metal, such as iron.

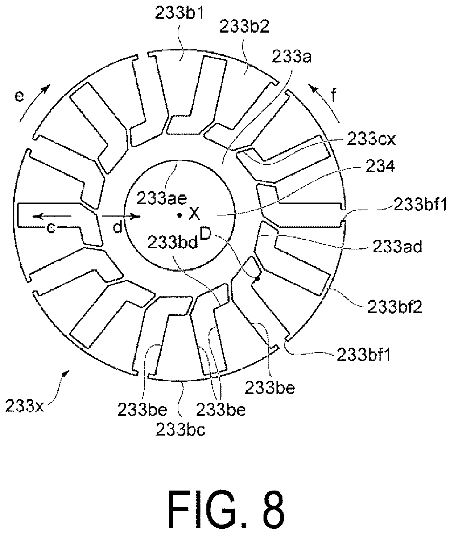

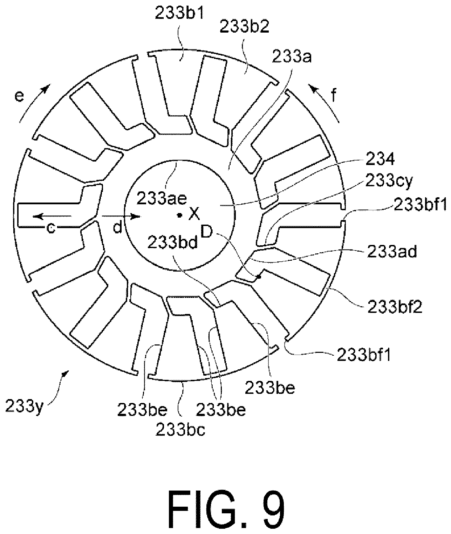

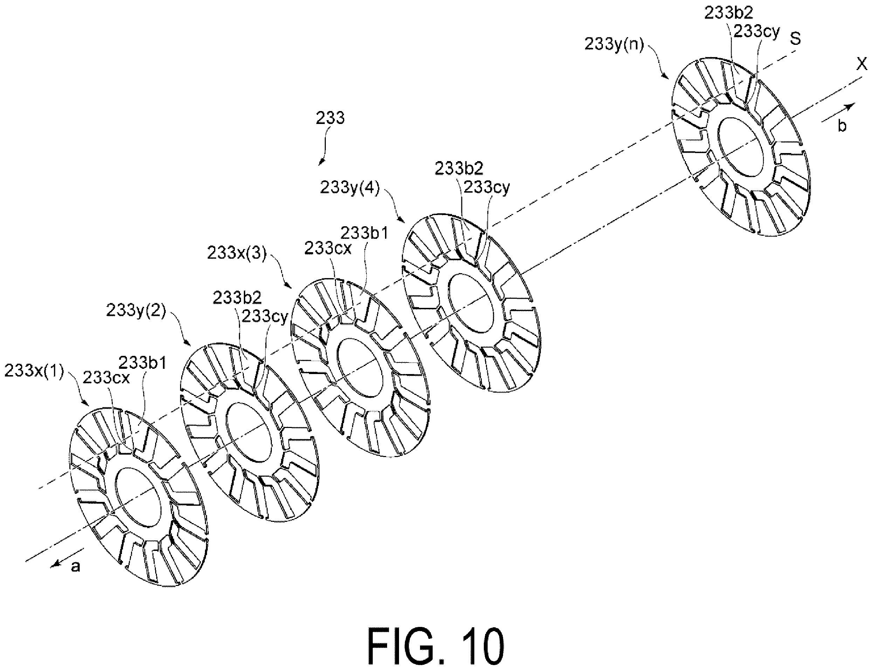

FIG. 8 illustrates a plan view of the first magnetic body 233x employed in the rotor core 233. FIG. 9 illustrates a plan view of the second magnetic body 233y employed in the rotor core 233. In FIGS. 8 and 9, the front surface sides of the paper surfaces of these drawings are the upper side a in FIG. 1. Further, FIG. 10 illustrates an exploded perspective view of the rotor core 233 in the rotor according to the present embodiment.

In FIGS. 7 to 10, members having the same configuration and the same function as those of the rotor core 33 according to the first embodiment are denoted by the same alphanumeric symbols as those in the first embodiment under the tens digits of the reference numerals, and "2" is given to the hundreds digits of the reference numerals to indicate the two hundredth digits. Members having the same alphanumeric symbols as those in the first embodiment below the tens digits of the reference numerals are the same members as those in the first embodiment unless otherwise stated, and the repeated description will be omitted.

As illustrated in FIGS. 8 and 9, the first magnetic body 233x and the second magnetic body 233y after inverted have the same shape. In the first and second magnetic bodies 233x, 233y, outer peripheral parts 233bc of two adjacent magnetic pole pieces 233b1, 233b2 among the plurality of magnetic pole pieces are connected.

In the first and second magnetic bodies 33x, 33y in the first embodiment, the protruding parts 33bf protrude at both sides of the outer peripheral part 33bc in the circumferential direction ef, but in the present embodiment, the protruding parts 33bf opposed to the two adjacent magnetic pole pieces 33b, 33b are in a state of extending and being connected.

That is, in the present embodiment, as illustrated in FIGS. 8 and 9, in the first and second magnetic bodies 233x, 233y, among the plurality of magnetic pole pieces, the two respective adjacent magnetic pole pieces 233b1, 233b2 form a pair, and the outer peripheral parts 233bc are connected. Hereinafter, a portion of the outer peripheral parts 233bc being mutually connected is referred to as a "bridge part" and a reference numeral "233bf2" is given.

On the other hand, in the circumferential direction ef, the sides opposite to the sides of the magnetic pole pieces 233b1, 233b2 connected by the bridge parts 233bf2 at the outer peripheral parts 233bc include protruding parts 233bf1 further protruding toward the other adjacent magnetic pole pieces 233b1, 233b2 similarly to the first embodiment. That is, in the first and second magnetic bodies 233x, 233y, in the circumferential direction ef, the portions of the bridge parts 233bf2 of connecting the outer peripheral parts 233bc of the magnetic pole pieces 233b 1, 233b2 being present and the portions of the protruding parts 233bf1 being mutually opposed and separated are alternately repeated.

As illustrated in FIG. 10, in the rotor core 233, a total of n pieces (layers) of both of the first magnetic bodies 233x and the second magnetic bodies 233y are alternately overlapped and stacked one by one.

The number of stacked magnetic bodies n in the rotor core 233 is an even number, and the half is each of the first magnetic bodies 233x and the second magnetic bodies 233y.

As illustrated in FIG. 10, in the rotor core 233, the odd-numbered layers including the first layer and the third layer are the first magnetic bodies 233x, the even-numbered layers including the second layer and the fourth layer are the second magnetic bodies 233y, the fifth layer to the (n-1)-th layer are not illustrated, and the lowermost n-th layer is the second magnetic body 233y.

As can be seen from the magnetic pole pieces 233b1, 233b2 for the auxiliary line S to pass through in FIG. 10, coupling parts 233cx and coupling parts 233cy are alternately coupled in the magnetic pole pieces 233b1, 233b2 in the stacking direction.

Between the mutual outer peripheral parts 233bc of the adjacent magnetic pole pieces 233b1, 233b2, the portions of the bridge parts 233bf2 being present and the portions of the protruding parts 233bf1 being opposed to and separated from one another are alternately repeated in the stacking direction at the same position in the circumferential direction ef. That is, in the circumferential direction ef, the portions of the outer peripheral parts 233bc being connected by the bridge parts 233bf2 are alternated in the stacking direction.

As illustrated in FIG. 7, in the rotor core 233 obtained by stacking the first and second magnetic bodies 233x, 233y, the stacked body of the magnetic pole pieces 233b1, 233b2 and the stacked body of an annular part 233a are in a state of being coupled by the coupling parts 233cx and the coupling parts 233cy. Since the outer peripheral parts 233bc of the magnetic pole pieces 233b 1, 233b2 are connected to be alternated in the stacking direction (that is, in a staggered manner), the rotor core 233 as a whole has a substantially columnar shape.

The magnets 31 are disposed between the respective magnetic pole pieces 233b1, 233b2 adjacent to one another in the circumferential direction ef similarly to the first embodiment. The plurality of magnets 31 extend radially from the annular part 233a in the radial direction cd. The magnets 31 are disposed such that the magnetic poles are the same as in the first embodiment.

In the present embodiment, the coupling parts 233cx and the coupling parts 233cy provided in the respective first magnetic bodies 233x and second magnetic bodies 233y alternately stacked are at different positions in the circumferential direction ef. Therefore, the respective coupling part 233cx and coupling part 233cy are not in contact in the stacking direction, but are separated by one magnetic body (one layer).

That is, the number of stacked magnetic bodies (the number of layers) of each of the coupling parts 233cx and the coupling parts 233cy is half the number of stacked magnetic bodies (the number of layers) n of the magnetic pole pieces 233b 1, 233b2 and the annular part 233a, and magnetic paths becoming ineffective magnetic flux are significantly reduced. In addition, since the coupling part 233cx and the coupling part 233cy are divided into very thin film magnetic paths in the stacking direction, a leakage of magnetic flux to the annular part 233a is less likely to occur. Therefore, according to the present embodiment, since the ineffective magnetic flux can be reduced and the effective magnetic flux can be increased, the magnetic flux generated from the magnet 31 can be effectively utilized.

According to the present embodiment, the magnetic flux generated from the magnets 31 can be effectively utilized, and therefore the amount of magnet used can be reduced and cost reduction and weight reduction and size reduction of the motor can be achieved.

Alternatively, with the present embodiment, it is possible to provide a motor having high efficiency and high performance, without reducing or significantly reducing the amount of magnet used, as compared with the conventional configuration.

In addition, although the total thicknesses of the coupling parts 233cx and the coupling parts 233cy in the stacking direction (including the gaps between the layers) are substantially the same as in the case of one coupling part, the number of coupling parts is two, and the mechanical strength of the rotor core 233 is high.

In the present embodiment, by extending the coupling parts 233cx and the coupling parts 233cy in the oblique direction, it is possible to extend the length of the coupling parts 233cx and the coupling parts 233cy serving as magnetic paths to allow increasing the magnetic resistance to the leakage magnetic flux.

In addition, in the present embodiment, since the first magnetic bodies 233x and the second magnetic bodies 233y alternately stacked have the same shape of the fronts and the backs being merely inverted to one another, it is possible to manufacture the rotor core 233 using only one component (magnetic body). Therefore, according to the present embodiment, it is possible to suppress an increase in the number of components and suppress an increase in the manufacturing cost of the motor.

Furthermore, in the present embodiment, since the outer peripheral parts 233bc of the two (a pair of) adjacent magnetic pole pieces 233b 1, 233b2 are connected in a staggered manner in the stacking direction, the rotor core 233 as a whole has a substantially columnar shape, and the mechanical strength (annular strength) of the rotor core 233 can be improved.

### Third Embodiment

A rotor according to the third embodiment being one example of the present invention will be described below.

The rotor according to the third embodiment is different from the rotor 3 according to the first embodiment only in a configuration of a rotor core. In the motor 1 illustrated in FIGS. 1 and 2 described in the first embodiment, the rotor according to the present embodiment can be used instead of the rotor 3. Therefore, reference should be made to the motor 1 illustrated in FIGS. 1 and 2 and the description in the first embodiment for the details of the entire configuration, the operation, the application, and the like of the motor using the rotor according to the present embodiment.

The present embodiment is entirely the same as the first embodiment except that a rotor core 333 described below is used instead of the rotor core 33 in the rotor 3 according to the first embodiment. Therefore, for the configuration in the rotor other than the rotor core, reference should be made to the description of the rotor 3 according to the first embodiment.

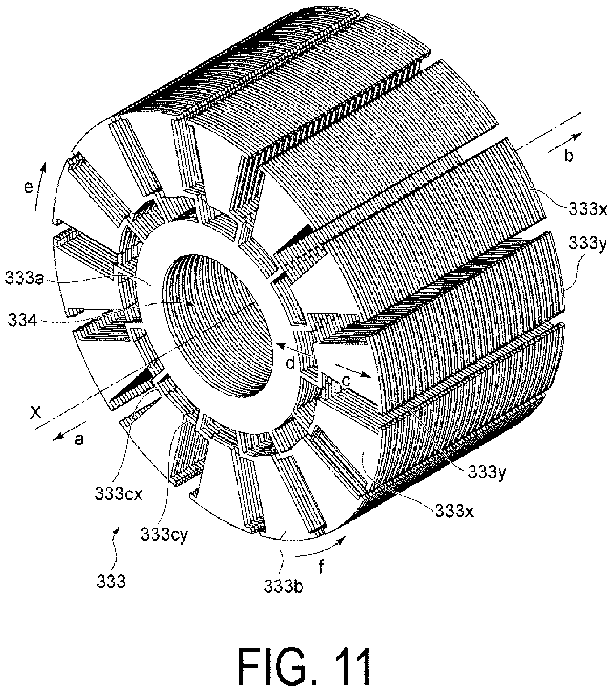

FIG. 11 illustrates a perspective view of the rotor core 333 as one component of the rotor according to the present embodiment.

The rotor core 333 is formed of a stacked body of a plurality of magnetic bodies. Specifically, the plurality of magnetic bodies include a plurality of first magnetic bodies 333x and a plurality of second magnetic bodies 333y. The first and second magnetic bodies 333x, 333y are very thin sheets made of metal, such as iron.

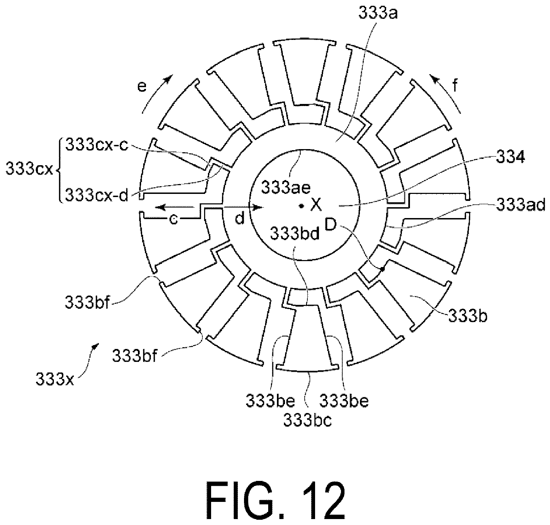

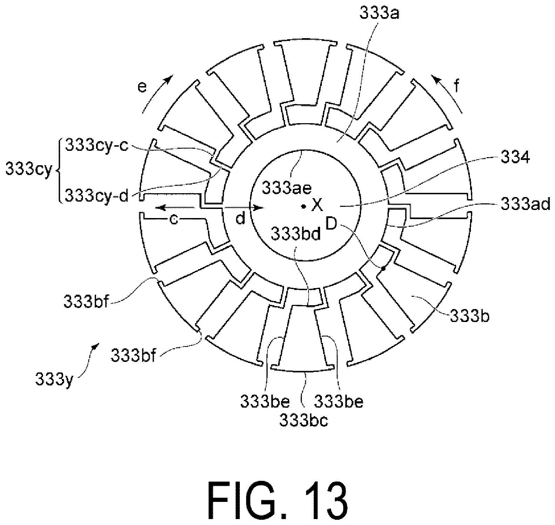

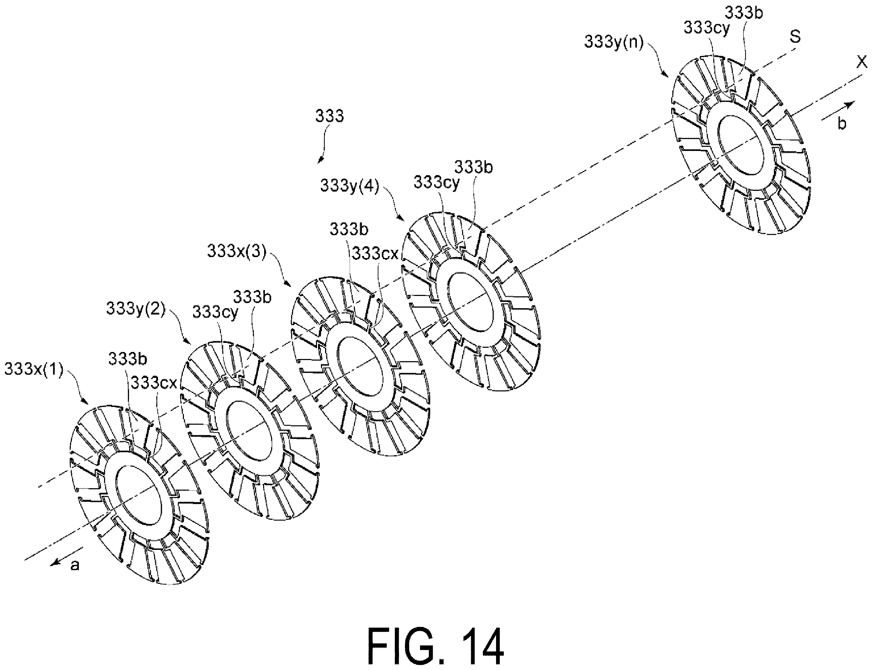

FIG. 12 illustrates a plan view of the first magnetic body 333x employed in the rotor core 333. FIG. 13 illustrates a plan view of the second magnetic body 333y employed in the rotor core 333. In FIGS. 12 and 13, the front surface sides of the paper surfaces of these drawings are the upper side a in FIG. 1. Further, FIG. 14 illustrates an exploded perspective view of the rotor core 333 in the rotor according to the present embodiment.

In FIGS. 11 to 14, members having the same configuration and the same function as those of the rotor core 33 according to the first embodiment are denoted by the same alphanumeric symbols as those in the first embodiment under the tens digits of the reference numerals, and "3" is given to the hundreds digits of the reference numerals to indicate the three hundredth digits. Members having the same alphanumeric symbols as those in the first embodiment below the tens digits of the reference numerals are the same members as those in the first embodiment unless otherwise stated, and the repeated description will be omitted.

As illustrated in FIGS. 12 and 13, the first magnetic body 333x and the second magnetic body 333y have the same shape except that the fronts and the backs are inverted to one another.

In the present embodiment, shapes of coupling parts 333cx, 333cy coupling the end portions (inner peripheral parts 333bd) at the base point D sides of the plurality of magnetic pole pieces 333b and an outer peripheral edges 333ad of an annular part 333a are different from the coupling parts 33cx, 33cy in the first embodiment.

As illustrated in FIG. 12, the coupling part 333cx of the first magnetic body 333x is at a downstream side in the clockwise direction e in the inner peripheral part 333bd of the magnetic pole piece 333b in the circumferential direction ef. The coupling part 333cx includes a first coupling part 333cx-d coupled to the outer peripheral edge 333ad of the annular part 333a and extending in the direction of the outer peripheral side c and a second coupling part 333cx-c continuous with the first coupling part 333cx-d, changing the direction substantially at a right angle, extending in the counterclockwise direction f, and coupled to the inner peripheral part 333bd of the magnetic pole piece 333b.

That is, the extending direction of the first coupling part 333cx-d has the component in the radial direction cd, and the extending direction of the second coupling part 333cx-c has the component in the circumferential direction ef. That is, it can be said that the coupling part 333cx including the first coupling part 333cx-d and the second coupling part 333cx-c extends with both components of the component in the radial direction cd and the component in the circumferential direction ef.

As described above, "both components of the component in the radial direction and the component in the circumferential direction" described in the first embodiment in the aspect different from the present embodiment conceptually include a case where portions (the first coupling part 333cx-d and the second coupling part 333cx-c) extending in the components in the respective directions are separately provided and the portions are continuous as in the case of the present embodiment.

On the other hand, as illustrated in FIG. 13, the coupling part 333cy of the second magnetic body 333y is at the upstream side in the clockwise direction e in the inner peripheral part 333bd of the magnetic pole piece 333b in the circumferential direction ef. The coupling part 333cy includes a first coupling part 333cy-d coupled to the outer peripheral edge 333ad of the annular part 333a and extending in the direction of the outer peripheral side c and a second coupling part 333cy-c continuous with the first coupling part 333cy-d, changing the direction substantially at a right angle, extending in the clockwise direction e, and coupled to the inner peripheral part 333bd of the magnetic pole piece 333b.

That is, the extending direction of the first coupling part 333cy-d has the component in the radial direction cd, and the extending direction of the second coupling part 333cy-c has the component in the circumferential direction ef. That is, it can be said that the coupling part 333cy including the first coupling part 333cy-d and the second coupling part 333cy-c extends with both components of the component in the radial direction cd and the component in the circumferential direction ef.

As illustrated in FIG. 14, in the rotor core 333, a total of n pieces (layers) of both of the first magnetic bodies 333x and the second magnetic bodies 333y are alternately overlapped and stacked one by one.

The number of stacked magnetic bodies n in the rotor core 333 is an even number, and the half is each of the first magnetic bodies 333x and the second magnetic bodies 333y.

As illustrated in FIG. 14, in the rotor core 333, the odd-numbered layers including the first layer and the third layer are the first magnetic bodies 333x, the even-numbered layers including the second layer and the fourth layer are the second magnetic bodies 333y, the fifth layer to the (n-1)-th layer are not illustrated, and the lowermost n-th layer is the second magnetic body 333y.

As can be seen from the magnetic pole pieces 333b for the auxiliary line S to pass through in FIG. 14, the coupling parts 333cx and the coupling parts 333cy are alternately coupled in magnetic pole pieces 333b1, 333b2 in the stacking direction.

As illustrated in FIG. 11, in the rotor core 333 obtained by stacking the first and second magnetic bodies 333x, 333y, the stacked body of the magnetic pole pieces 333b and the stacked body of the annular parts 333a are in a state of being coupled by the coupling parts 333cx and the coupling parts 333cy.

The magnets 31 are disposed between the respective magnetic pole pieces 333b adjacent to one another in the circumferential direction ef similarly to the first embodiment. The plurality of magnets 31 extend radially from the annular part 333a in the radial direction cd. The magnets 31 are disposed such that the magnetic poles are the same as in the first embodiment.

In the present embodiment, the coupling parts 333cx and the coupling parts 333cy provided in the respective first magnetic bodies 333x and second magnetic bodies 333y alternately stacked are at different positions in the circumferential direction ef. Therefore, the respective coupling part 333cx and coupling part 333cy are not in contact in the stacking direction, but are separated by one magnetic body (one layer).

That is, the number of stacked magnetic bodies (the number of layers) of each of the coupling parts 333cx and the coupling parts 333cy is half the number of stacked magnetic bodies (the number of layers) n of the magnetic pole pieces 333b and the annular part 333a, and magnetic paths becoming ineffective magnetic flux are significantly reduced. In addition, since the coupling part 333cx and the coupling part 333cy are divided into very thin film magnetic paths in the stacking direction, a leakage of magnetic flux to the annular part 333a is less likely to occur. Therefore, according to the present embodiment, since the ineffective magnetic flux can be reduced and the effective magnetic flux can be increased, the magnetic flux generated from the magnet 31 can be effectively utilized.

According to the present embodiment, the magnetic flux generated from the magnets 31 can be effectively utilized, and therefore the amount of magnet used can be reduced and cost reduction and weight reduction and size reduction of the motor can be achieved.

Alternatively, with the present embodiment, it is possible to provide a motor having high efficiency and high performance, without reducing or significantly reducing the amount of magnet used, as compared with the conventional configuration.

In addition, although the total thicknesses of the coupling parts 333cx and the coupling parts 333cy in the stacking direction (including the gaps between the layers) are substantially the same as in the case of one coupling part, the number of coupling parts is two, and the mechanical strength of the rotor core 333 is high.

In addition, in the present embodiment, the coupling part 333cx and the coupling part 333cy are configured such that the two portions of the first coupling parts 333cx-d, 333cy-d having components in the radial direction cd and the second coupling parts 333cx-c, 333cy-c having components in the circumferential direction ef extend and are continuous. Thus, the lengths of the coupling parts 333cx and the coupling parts 333cy serving as magnetic paths can be increased, and the magnetic resistance to leakage magnetic flux can be increased.

In addition, in the present embodiment, since the first magnetic bodies 333x and the second magnetic bodies 333y alternately stacked have the same shape of the fronts and the backs being merely inverted to one another, it is possible to manufacture the rotor core 333 using only one component (magnetic body). Therefore, according to the present embodiment, it is possible to suppress an increase in the number of components and suppress an increase in the manufacturing cost of the motor.

### Fourth Embodiment

A rotor according to the fourth embodiment being one example of the present invention will be described below.

The rotor according to the fourth embodiment is different from the rotor 3 according to the first embodiment only in a configuration of a rotor core. In the motor 1 illustrated in FIGS. 1 and 2 described in the first embodiment, the rotor according to the present embodiment can be used instead of the rotor 3. Therefore, reference should be made to the motor 1 illustrated in FIGS. 1 and 2 and the description in the first embodiment for the details of the entire configuration, the operation, the application, and the like of the motor using the rotor according to the present embodiment.

The present embodiment is entirely the same as the first embodiment except that a rotor core 433 described below is used instead of the rotor core 33 in the rotor 3 according to the first embodiment. Therefore, for the configuration in the rotor other than the rotor core, reference should be made to the description of the rotor 3 according to the first embodiment.

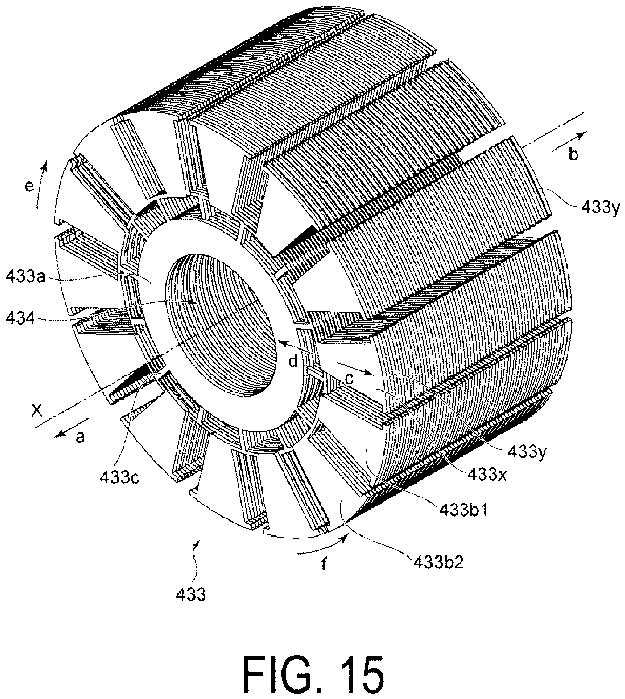

FIG. 15 illustrates a perspective view of the rotor core 433 as one component in the rotor according to the present embodiment.

The rotor core 433 is formed of a stacked body of a plurality of magnetic bodies. Specifically, the plurality of magnetic bodies include a plurality of first magnetic bodies 433x and a plurality of second magnetic bodies 433y. The first magnetic body 433x and the second magnetic body 433y are disposed such that magnetic pole pieces 433b1, 433b2 described later are at positions displaced from one another in the circumferential direction ef, and are actually the same member. The first and second magnetic bodies 433x, 433y are very thin sheets made of metal, such as iron.

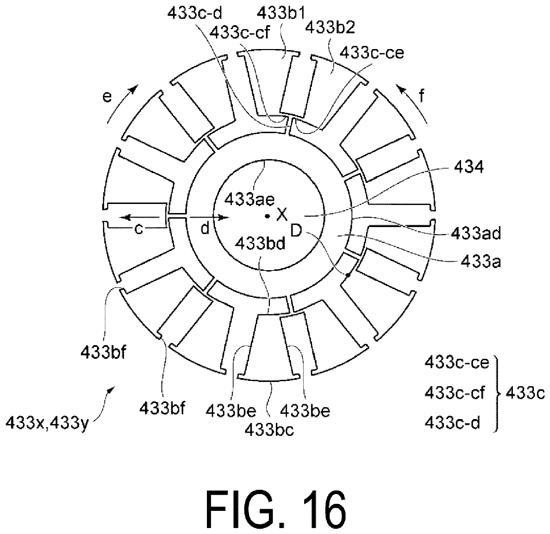

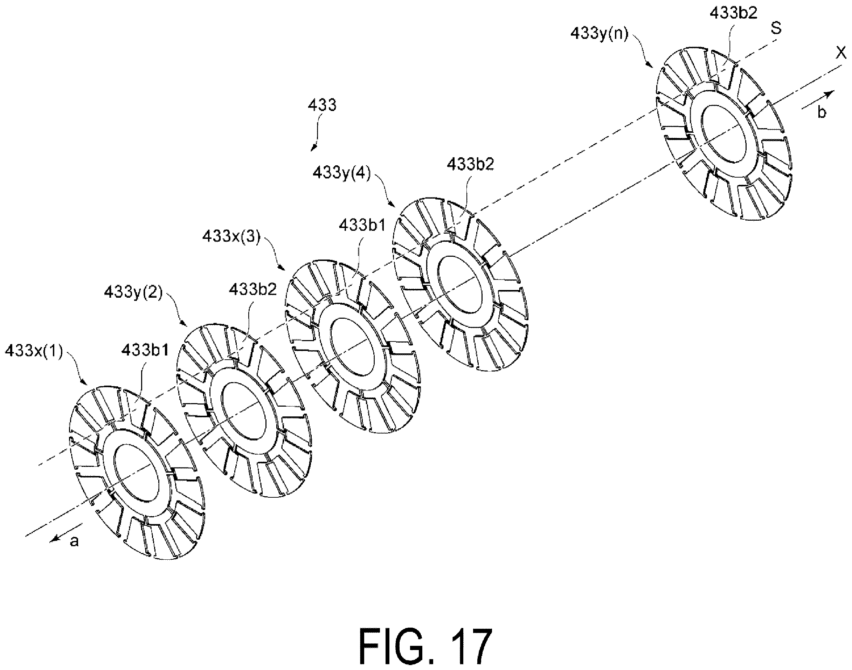

FIG. 16 illustrates a plan view of the first and second magnetic bodies 433x, 433y employed in the rotor core 433. In FIG. 16, the front surface side of the paper surface of the drawing is the upper side a in FIG. 1. Further, FIG. 17 illustrates an exploded perspective view of the rotor core 433 in the rotor according to the present embodiment.

In FIGS. 15 to 17, members having the same configuration and the same function as those of the rotor core 33 according to the first embodiment are denoted by the same alphanumeric symbols as those in the first embodiment under the tens digits of the reference numerals, and "4" is given to the hundreds digits of the reference numerals to indicate the four hundredth digits. Members having the same alphanumeric symbols as those in the first embodiment below the tens digits of the reference numerals are the same members as those in the first embodiment unless otherwise stated, and the repeated description will be omitted.

In the present embodiment, the shapes of the coupling parts 433c coupling the end portions (inner peripheral parts 433bd) at the base point D sides of the plurality of magnetic pole pieces 433b 1, 433b2 and an outer peripheral edges 433ad of an annular part 433a are different from the coupling parts 33cx, 33cy in the first embodiment.

As illustrated in FIG. 16, the coupling part 433c includes a first coupling part 433c-d coupled to the outer peripheral edge 433ad of the annular part 433a and extending in the outer peripheral side c direction, a second coupling part 433c-cf continuous with the first coupling part 333cx-d, and a third coupling part 433c-ce similarly continuous with the first coupling part 333cx-d. The second coupling part 433c-cf is continuous with a first coupling part 433cx-d, changes the direction substantially at a right angle, extends in the counterclockwise direction f, and is coupled to the inner peripheral part 433bd of the magnetic pole piece 433b1. On the other hand, the third coupling part 433c-ce is continuous with the first coupling part 433cx-d, changes the direction substantially at a right angle in a direction opposite to the second coupling part 433c-cf, extends in the clockwise direction e, and is coupled to the inner peripheral part 433bd of the magnetic pole piece 433b2.

That is, the extending direction of the first coupling part 433c-d has the component in the radial direction cd, and the extending directions of the second coupling part 433c-cf and the third coupling part 433c-ce have the components in the circumferential direction ef. That is, it can be said that the coupling part 433c including the first coupling part 433c-d, the second coupling part 433c-cf, and the third coupling part 433c-ce extends with both components of the component in the radial direction cd and the component in the circumferential direction ef. The second coupling part 433c-cf and the third coupling part 433c-ce have a continuous arc shape centered on a point continuous with the first coupling part 433c-d, and can be regarded as members of coupling a pair of the adjacent magnetic pole pieces 433b 1, 433b2.

As illustrated in FIG. 17, in the rotor core 433, the first magnetic bodies 433x and the second magnetic bodies 433y are overlapped and stacked in a total of n pieces (layers). The second magnetic body 433y is a member located to be displaced by 1/14 rotation in the circumferential direction ef from the first magnetic body 433x, and the first magnetic body 433x and the second magnetic body 433y are the same members as described above.

The number of stacked magnetic bodies n in the rotor core 433 is an even number, and the half is each of the first magnetic bodies 433x and the second magnetic bodies 433y.

As illustrated in FIG. 17, in the rotor core 433, the odd-numbered layers including the first layer and the third layer are the first magnetic bodies 433x, the even-numbered layers including the second layer and the fourth layer are the second magnetic bodies 433y, the fifth layer to the (n-1)-th layer are not illustrated, and the lowermost n-th layer is the second magnetic body 433y.

As can be seen from the magnetic pole pieces 433b 1, 433b2 for the auxiliary line S to pass through in FIG. 17, the magnetic pole pieces 433b 1 and the magnetic pole pieces 433b2 are in a state of being alternately stacked. Therefore, the coupling parts 433c in the second magnetic bodies 433y at the even-numbered layers are stacked so as to be located at positions at the coupling parts 433c being absent in the first magnetic bodies 433x at the odd-numbered layers in the circumferential direction ef. Therefore, as illustrated in FIG. 15, in the circumferential direction ef, the coupling parts 433c are located between all of the adjacent magnetic pole pieces 433b 1, 433b2. In addition, the respective coupling parts 433c are in a state of the coupling parts 433c being arranged every other layer in the stacking direction.

The magnets 31 are disposed between the respective magnetic pole pieces 433b1, 433b2 adjacent to one another in the circumferential direction ef similarly to the first embodiment. The plurality of magnets 31 extend radially from the annular part 433a in the radial direction cd. The magnets 31 are disposed such that the magnetic poles are the same as in the first embodiment.

In the present embodiment, the coupling parts 433c provided in the respective first magnetic bodies 433x and second magnetic bodies 433y alternately stacked are at different positions in the circumferential direction ef. Therefore, the respective coupling part 433c are not in contact in the stacking direction, but are separated by one magnetic body (one layer).

That is, the number of stacked magnetic bodies (the number of layers) of each of the coupling parts 433c is half the number of stacked magnetic bodies (the number of layers) n of the magnetic pole pieces 433b1, 433b2 and the annular part 433a, and magnetic paths becoming ineffective magnetic flux are significantly reduced. In addition, since the coupling parts 433c are divided into very thin film magnetic paths in the stacking direction, a leakage of magnetic flux to the annular part 433a is less likely to occur. Therefore, according to the present embodiment, since the ineffective magnetic flux can be reduced and the effective magnetic flux can be increased, the magnetic flux generated from the magnet 31 can be effectively utilized.

According to the present embodiment, the magnetic flux generated from the magnets 31 can be effectively utilized, and therefore the amount of magnet used can be reduced and cost reduction and weight reduction and size reduction of the motor can be achieved.

Alternatively, with the present embodiment, it is possible to provide a motor having high efficiency and high performance, without reducing or significantly reducing the amount of magnet used, as compared with the conventional configuration.

In addition, in the present embodiment, the coupling parts 433c are configured such that the two portions of the first coupling part 433c-d having the component in the radial direction cd and the second coupling part 433c-cf or the third coupling part 433c-ce having the component in the circumferential direction ef extend and are continuous. Thus, the lengths of the coupling parts 433c serving as magnetic paths can be increased, and the magnetic resistance to leakage magnetic flux can be increased.

In addition, in the present embodiment, since the first magnetic bodies 433x and the second magnetic bodies 433y alternately stacked have the same shape of being merely displaced in the circumferential direction ef, it is possible to manufacture the rotor core 433 using only one component (magnetic body). Therefore, according to the present embodiment, it is possible to suppress an increase in the number of components and suppress an increase in the manufacturing cost of the motor.

### Fifth Embodiment

A rotor according to the fifth embodiment being one example of the present invention will be described below.

The rotor according to the fifth embodiment is different from the rotor 3 according to the first embodiment only in a configuration of a rotor core. In the motor 1 illustrated in FIGS. 1 and 2 described in the first embodiment, the rotor according to the present embodiment can be used instead of the rotor 3. Therefore, reference should be made to the motor 1 illustrated in FIGS. 1 and 2 and the description in the first embodiment for the details of the entire configuration, the operation, the application, and the like of the motor using the rotor according to the present embodiment.

The present embodiment is entirely the same as the first embodiment except that a rotor core 533 described below is used instead of the rotor core 33 in the rotor 3 according to the first embodiment. Therefore, for the configuration in the rotor other than the rotor core, reference should be made to the description of the rotor 3 according to the first embodiment.

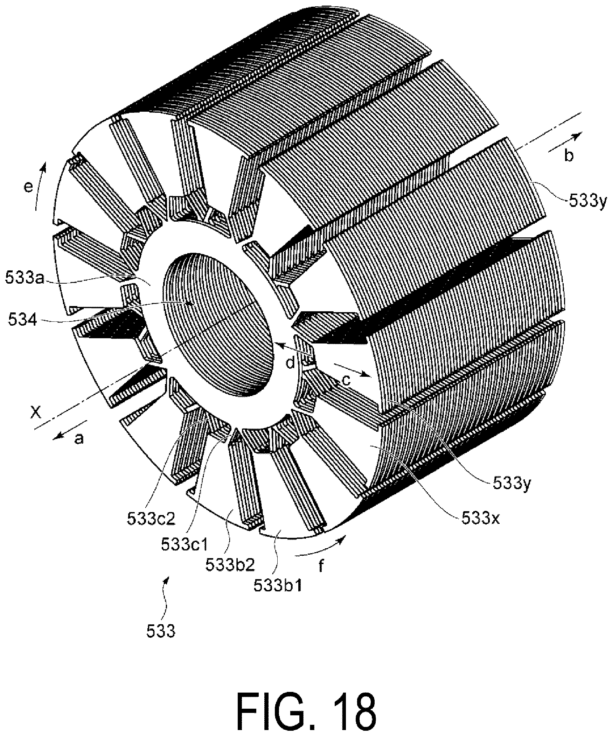

FIG. 18 illustrates a perspective view of the rotor core 533 as one component of the rotor according to the present embodiment.

The rotor core 533 is formed of a stacked body of a plurality of magnetic bodies. Specifically, the plurality of magnetic bodies include a plurality of first magnetic bodies 533x and a plurality of second magnetic bodies 533y. The first magnetic body 533x and the second magnetic body 533y are at positions disposed such that magnetic pole pieces 533b1, 533b2 described later are displaced from one another in the circumferential direction ef, and are actually the same member. The first and second magnetic bodies 533x, 533y are very thin sheets made of metal, such as iron.

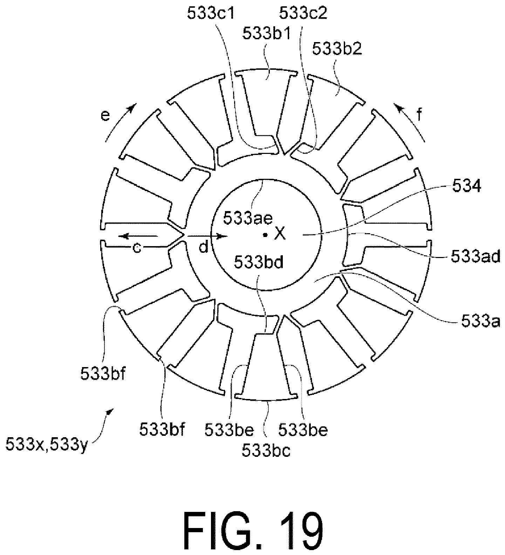

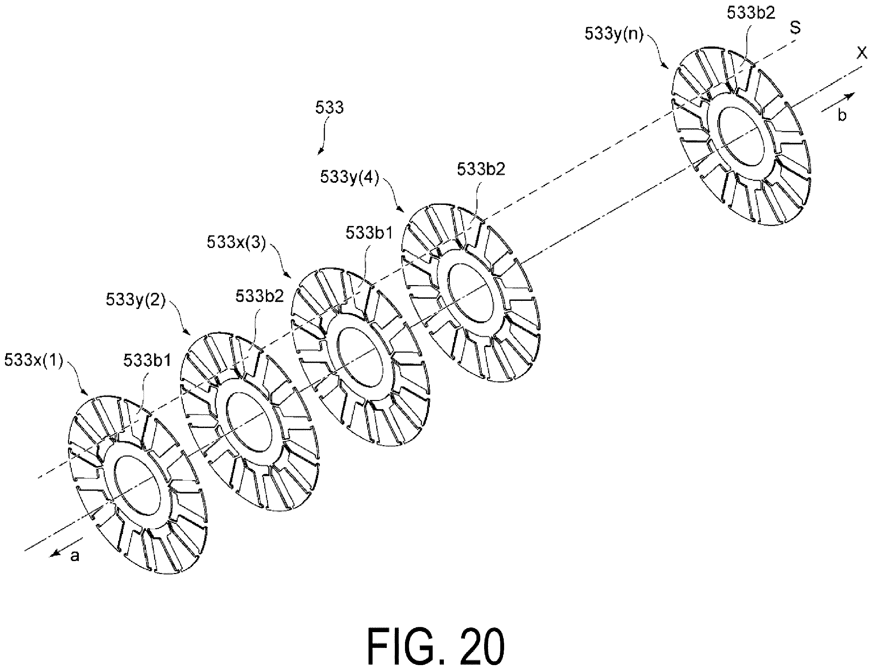

FIG. 19 illustrates a plan view of the first and second magnetic bodies 533x, 533y employed in the rotor core 533. In FIG. 19, the front surface side of the paper surface of the drawing is the upper side a in FIG. 1. Further, FIG. 20 illustrates an exploded perspective view of the rotor core 533 in the rotor according to the present embodiment.

In FIGS. 18 to 20, members having the same configuration and the same function as those of the rotor core 33 according to the first embodiment are denoted by the same alphanumeric symbols as those in the first embodiment under the tens digits of the reference numerals, and "5" is given to the hundreds digits of the reference numerals to indicate the five hundredth digits. Members having the same alphanumeric symbols as those in the first embodiment below the tens digits of the reference numerals are the same members as those in the first embodiment unless otherwise stated, and the repeated description will be omitted.

In the present embodiment, the shapes of coupling parts 533c1, 533c2 coupling the end portions (inner peripheral parts 533bd) at the base point D sides of the plurality of magnetic pole pieces 533b1, 533b2 and outer peripheral edges 533ad of an annular part 533a are the same as the coupling parts 33cy, 33cx in the first embodiment. However, in the present embodiment, the arrangement of the coupling parts 533c1, 533c2 in the first and second magnetic bodies 533x, 533y is different from the arrangement of the coupling parts 33cy, 33cx in the first and second magnetic bodies 33x, 33y of the first embodiment.

As illustrated in FIG. 19, in the two adjacent magnetic pole pieces 533b1, 533b2, positions in the circumferential direction ef of coupling points of coupling the coupling parts 533c1, 533c2 to the inner peripheral parts 533bd are different. That is, in the circumferential direction ef, while the coupling point of the inner peripheral part 533bd of the magnetic pole piece 533b1 with the coupling part 533c1 is located at the downstream side in the clockwise direction e, the coupling point of the inner peripheral part 533bd of the magnetic pole piece 533b2 with the coupling part 533c2 is located at the upstream side in the clockwise direction e.

As illustrated in FIG. 19, the coupling parts 533c1 of the first and second magnetic bodies 533x, 533y extend in the oblique direction with respect to the radial direction cd and couple the outer peripheral edges 533ad of the annular part 533a and the inner peripheral parts 533bd of the magnetic pole pieces 533b1. That is, the coupling parts 533c1 extend having both components of the component in the radial direction cd and the component in the circumferential direction ef.

Note that, as illustrated in FIG. 19, both of the coupling part 533c1 and the coupling part 533c2 extend in the oblique directions with respect to the radial directions cd such that a distance between the coupling points of the inner peripheral parts 533bd of a pair of the adjacent magnetic pole pieces 533b1, 533b2 is longer than a distance between the coupling points with the outer peripheral edges 533ad of the annular part 533a.

As illustrated in FIG. 20, in the rotor core 533, the first magnetic bodies 533x and the second magnetic bodies 533y are overlapped and stacked in a total of n pieces (layers). The second magnetic body 533y is a member located to be displaced by 1/14 rotation in the circumferential direction ef from the first magnetic body 533x, and the first magnetic body 533x and the second magnetic body 533y are the same members as described above.

The number of stacked magnetic bodies n in the rotor core 533 is an even number, and the half is each of the first magnetic bodies 533x and the second magnetic bodies 533y.

As illustrated in FIG. 20, in the rotor core 533, the odd-numbered layers including the first layer and the third layer are the first magnetic bodies 533x, the even-numbered layers including the second layer and the fourth layer are the second magnetic bodies 533y, the fifth layer to the (n-1)-th layer are not illustrated, and the lowermost n-th layer is the second magnetic body 533y.

As can be seen from the magnetic pole pieces 533b1, 533b2 for the auxiliary line S to pass through in FIG. 20, the magnetic pole pieces 533b1 and the magnetic pole pieces 533b2 are in a state of being alternately stacked. Therefore, the coupling parts 533c1, 533c2 in the second magnetic bodies 533y at the even-numbered layers are stacked so as to be located at positions at the coupling parts 533c1, 533c2 being absent in the first magnetic bodies 533x at the odd-numbered layers in the circumferential direction ef.

Therefore, as illustrated in FIG. 18, in the circumferential direction ef, the coupling parts 533c1, 533c2 are located at both sides of the inner peripheral parts 533bd of all the magnetic pole pieces 533b1, 533b2 in the circumferential direction ef. In addition, the respective coupling parts 533c1, 533c2 are in a state of the coupling part 533c1 or the coupling part 533c2 being arranged every other layer in the stacking direction.

The magnets 31 are disposed between the respective magnetic pole pieces 533b1, 533b2 adjacent to one another in the circumferential direction ef similarly to the first embodiment. The plurality of magnets 31 extend radially from the annular part 533a in the radial direction cd. The magnets 31 are disposed such that the magnetic poles are the same as in the first embodiment.

In the present embodiment, the coupling parts 533c1, 533c2 provided in the respective first magnetic bodies 533x and second magnetic bodies 533y alternately stacked are at different positions in the circumferential direction ef. Therefore, the respective coupling parts 533c1, 533c2 are not in contact in the stacking direction, but are separated by one magnetic body (one layer).

That is, the number of stacked magnetic bodies (the number of layers) of each of coupling parts 533c is half the number of stacked magnetic bodies (the number of layers) n of the magnetic pole pieces 533b1, 533b2 and the annular part 533a, and magnetic paths becoming ineffective magnetic flux are significantly reduced. In addition, since the coupling parts 533c1, 533c2 are divided into very thin film magnetic paths in the stacking direction, a leakage of magnetic flux to the annular part 533a is less likely to occur. Therefore, according to the present embodiment, since the ineffective magnetic flux can be reduced and the effective magnetic flux can be increased, the magnetic flux generated from the magnet 31 can be effectively utilized.

According to the present embodiment, the magnetic flux generated from the magnets 31 can be effectively utilized, and therefore the amount of magnet used can be reduced and cost reduction and weight reduction and size reduction of the motor can be achieved.

Alternatively, with the present embodiment, it is possible to provide a motor having high efficiency and high performance, without reducing or significantly reducing the amount of magnet used, as compared with the conventional configuration.

In the present embodiment, by extending the coupling parts 533c1 and the coupling parts 533c2 in the oblique direction, it is possible to increase the length of the coupling parts 533c1 and the coupling parts 533c2 serving as magnetic paths to allow increasing the magnetic resistance to the leakage magnetic flux.

In addition, in the present embodiment, since the first magnetic bodies 533x and the second magnetic bodies 533y alternately stacked have the same shape of being merely displaced in the circumferential direction ef, it is possible to manufacture the rotor core 533 using only one component (magnetic body). Therefore, according to the present embodiment, it is possible to suppress an increase in the number of components and suppress an increase in the manufacturing cost of the motor.

### Sixth Embodiment

A rotor according to the sixth embodiment being one example of the present invention will be described below.

The rotor according to the sixth embodiment is different from the rotor 3 according to the first embodiment only in a configuration of a rotor core. In the motor 1 illustrated in FIGS. 1 and 2 described in the first embodiment, the rotor according to the present embodiment can be used instead of the rotor 3. Therefore, reference should be made to the motor 1 illustrated in FIGS. 1 and 2 and the description in the first embodiment for the details of the entire configuration, the operation, the application, and the like of the motor using the rotor according to the present embodiment.

The present embodiment is entirely the same as the first embodiment except that a rotor core 633 described below is used instead of the rotor core 33 in the rotor 3 according to the first embodiment. Therefore, for the configuration in the rotor other than the rotor core, reference should be made to the description of the rotor 3 according to the first embodiment.

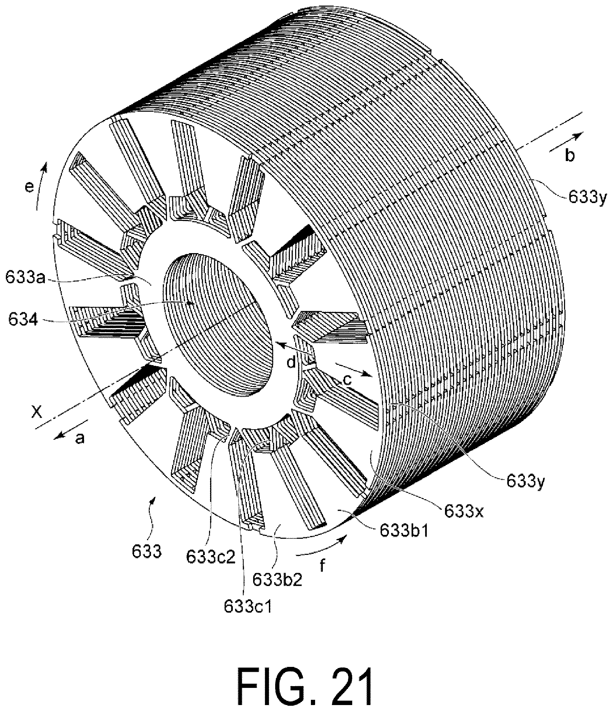

FIG. 21 illustrates a perspective view of the rotor core 633 as one component of the rotor according to the present embodiment.

The rotor core 633 is formed of a stacked body of a plurality of magnetic bodies. Specifically, the plurality of magnetic bodies include a plurality of first magnetic bodies 633x and a plurality of second magnetic bodies 633y. The first magnetic body 633x and the second magnetic body 633y are at positions disposed such that magnetic pole pieces 633b1, 633b2 described later are displaced from one another in the circumferential direction ef, and are actually the same member. The first and second magnetic bodies 633x, 633y are very thin sheets made of metal, such as iron.

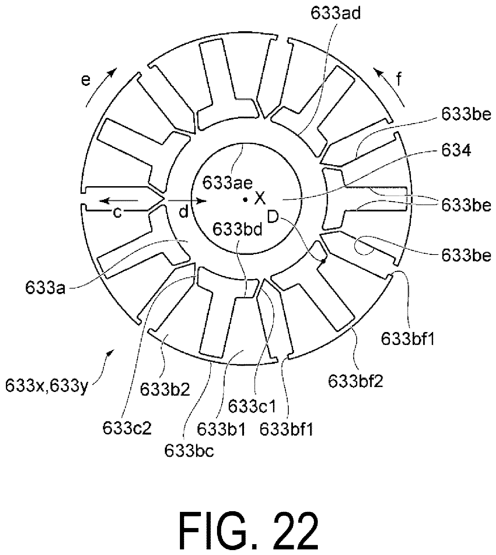

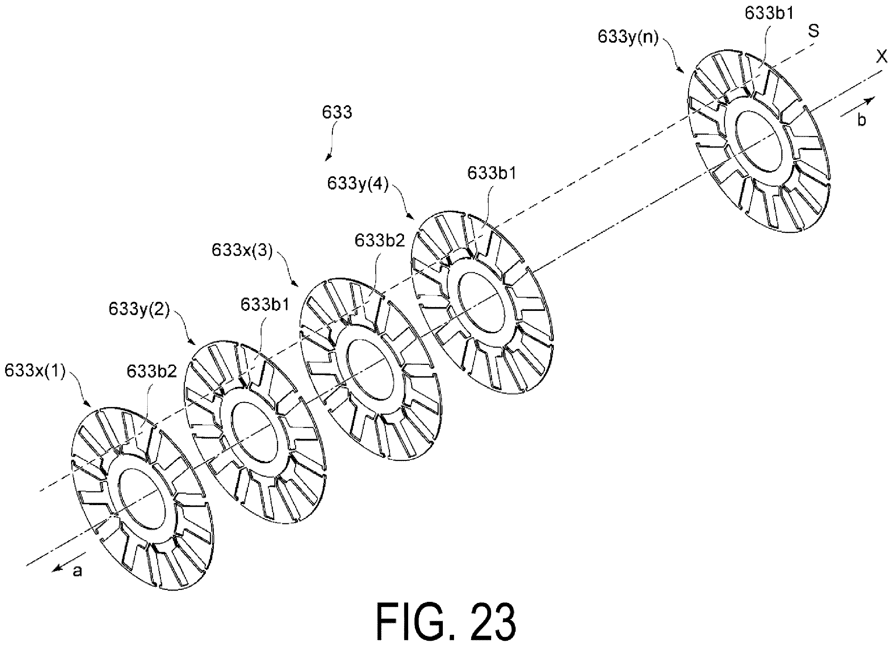

FIG. 22 illustrates a plan view of the first and second magnetic bodies 633x, 633y employed in the rotor core 633. In FIG. 22, the front surface side of the paper surface of the drawing is the upper side a in FIG. 1. Further, FIG. 23 illustrates an exploded perspective view of the rotor core 633 in the rotor according to the present embodiment.

In FIGS. 21 to 23, members having the same configuration and the same function as those of the rotor core 33 according to the first embodiment are denoted by the same alphanumeric symbols as those in the first embodiment under the tens digits of the reference numerals, and "6" is given to the hundreds digits of the reference numerals to indicate the six hundredth digits. Members having the same alphanumeric symbols as those in the first embodiment below the tens digits of the reference numerals are the same members as those in the first embodiment unless otherwise stated, and the repeated description will be omitted.

In the present embodiment, shapes of coupling parts 633c1, 633c2 coupling the end portions (inner peripheral parts 633bd) at the base point D sides of the plurality of magnetic pole pieces 633b 1, 633b2 and outer peripheral edges 633ad of an annular part 633a are the same as the coupling parts 533c1, 533c2 in the fifth embodiment. Therefore, for the coupling parts 633c1, 633c2, reference should be made to the description of the coupling parts 533c1, 533c2 in the fifth embodiment.

In the present embodiment, as illustrated in FIG. 22, in the first and second magnetic bodies 633x, 633y, outer peripheral parts 633bc of the two adjacent magnetic pole pieces 633b 1, 633b2 among the plurality of magnetic pole pieces are connected.

In the first and second magnetic bodies 533x, 533y in the fifth embodiment, protruding parts 533bf protrude at both sides of an outer peripheral part 533bc in the circumferential direction ef, but in the present embodiment, the protruding parts 533bf opposed to one another of the two adjacent magnetic pole pieces 533b, 533b are in a state of extending and being connected.

That is, as illustrated in FIG. 22, in the first and second magnetic bodies 633x, 633y, among the plurality of magnetic pole pieces, the two respective adjacent magnetic pole pieces 633b 1, 633b2 form a pair, and the outer peripheral parts 633bc are connected to one another. A portion where the outer peripheral parts 633bc are connected to one another is referred to as the "bridge part" in the present embodiment as well and is denoted by a reference numeral "633bf2".

On the other hand, in the circumferential direction ef, the sides opposite to the sides of the magnetic pole pieces 633b 1, 633b2 connected by the bridge parts 633bf2 at the outer peripheral parts 633bc include protruding parts 633bf1 further protruding toward the other adjacent magnetic pole pieces 633b 1, 633b2 similarly to the first and fifth embodiments. That is, in the first and second magnetic bodies 633x, 633y, in the circumferential direction ef, the portions of the bridge parts 633bf2 of connecting the outer peripheral parts 633bc of the magnetic pole pieces 633b 1, 633b2 being present and the portions of the protruding parts 633bf1 being opposed to and separated from one another are alternately repeated.

Note that, in the pair of the magnetic pole pieces 633b 1, 633b2 of the outer peripheral parts 633bc being connected to one another in the present embodiment, a combination is made by each of:
- the magnetic pole piece 633b 1 having a position of a coupling point with the coupling part 633c2 at an "upstream side" in the clockwise direction e of the inner peripheral part 633bd in the "upstream side" in the clockwise direction e; and
- the magnetic pole piece 633b2 having a position of a coupling point with the coupling part 633c1 at a "downstream side" in the clockwise direction e of the inner peripheral part 633bd in the "downstream side" in the clockwise direction e is located.

As illustrated in FIG. 23, in the rotor core 633, a total of n pieces (layers) of both of the first magnetic bodies 633x and the second magnetic bodies 633y are alternately overlapped and stacked one by one.

The number of stacked magnetic bodies n in the rotor core 633 is an even number, and the half is each of the first magnetic bodies 633x and the second magnetic bodies 633y.

As illustrated in FIG. 23, in the rotor core 633, the odd-numbered layers including the first layer and the third layer are the first magnetic bodies 633x, the even-numbered layers including the second layer and the fourth layer are the second magnetic bodies 633y, the fifth layer to the (n-1)-th layer are not illustrated, and the lowermost n-th layer is the second magnetic body 633y.

As can be seen from the magnetic pole pieces 633b 1, 633b2 for the auxiliary line S to pass through in FIG. 23, the magnetic pole pieces 633b 1 and the magnetic pole pieces 633b2 are in a state of being alternately stacked. Therefore, the coupling parts 633c1, 633c2 in the second magnetic bodies 633y at the even-numbered layers are stacked so as to be located at positions at the coupling parts 633c1, 633c2 being absent in the first magnetic bodies 633x at the odd-numbered layers in the circumferential direction ef.

Therefore, as illustrated in FIG. 21, in the circumferential direction ef, the coupling parts 633c1, 633c2 are located at both sides of the inner peripheral parts 633bd of all the magnetic pole pieces 633b 1, 633b2 in the circumferential direction ef. In addition, the respective coupling parts 633c1, 633c2 are in a state of the coupling parts 633c1 or the coupling parts 633c2 being arranged every other layer in the stacking direction.

Between the outer peripheral parts 633bc of the adjacent magnetic pole pieces 633b 1, 633b2, the portions of the bridge parts 633bf2 being present and the portions of the protruding parts 633bf1 being opposed to and separated from one another are alternately repeated in the stacking direction at the same position in the circumferential direction ef. That is, in the circumferential direction ef, the portions of the outer peripheral parts 633bc being connected by the bridge parts 633bf2 are alternated in the stacking direction.

As illustrated in FIG. 21, in the rotor core 633 obtained by stacking the first and second magnetic bodies 633x, 633y, the stacked body of the magnetic pole pieces 633b1, 633b2 and the stacked body of the annular parts 633a are in a state of being coupled by the coupling parts 633c1 and the coupling parts 633c2. Since the outer peripheral parts 633bc of the magnetic pole pieces 633b1, 633b2 are connected to be alternated in the stacking direction (that is, in a staggered manner), the rotor core 633 as a whole has a substantially columnar shape.

The magnets 31 are disposed between the respective magnetic pole pieces 633b1, 633b2 adjacent to one another in the circumferential direction ef similarly to the first embodiment. The plurality of magnets 31 extend radially from the annular part 633a in the radial direction cd. The magnets 31 are disposed such that the magnetic poles are the same as in the first embodiment.

In the present embodiment, the coupling parts 633c1 and the coupling parts 633c2 provided in the respective first magnetic bodies 633x and second magnetic bodies 633y alternately stacked are at different positions in the circumferential direction ef. Therefore, the respective coupling part 633c1 and coupling part 633c2 are not in contact in the stacking direction, but are separated by one magnetic body (one layer).

That is, the number of stacked magnetic bodies (the number of layers) of each of the coupling parts 633c1 and the coupling parts 633c2 is half the number of stacked magnetic bodies (the number of layers) n of the magnetic pole pieces 633b 1, 633b2 and the annular part 633a, and magnetic paths becoming ineffective magnetic flux are significantly reduced. In addition, since the coupling part 633c1 and the coupling part 633c2 are divided into very thin film magnetic paths in the stacking direction, a leakage of magnetic flux to the annular part 633a is less likely to occur. Therefore, according to the present embodiment, since the ineffective magnetic flux can be reduced and the effective magnetic flux can be increased, the magnetic flux generated from the magnet 31 can be effectively utilized.

According to the present embodiment, the magnetic flux generated from the magnets 31 can be effectively utilized, and therefore the amount of magnet used can be reduced and cost reduction and weight reduction and size reduction of the motor can be achieved.

Alternatively, with the present embodiment, it is possible to provide a motor having high efficiency and high performance, without reducing or significantly reducing the amount of magnet used, as compared with the conventional configuration.

In addition, although the total thicknesses of the coupling parts 633c1 and the coupling parts 633c2 in the stacking direction (including the gaps between the layers) are substantially the same as in the case of one coupling part, the number of coupling parts is two, and the mechanical strength of the rotor core 633 is high.

In the present embodiment, by extending the coupling parts 633c1 and the coupling parts 633c2 in the oblique direction, it is possible to increase the length of the coupling parts 633c1 and the coupling parts 633c2 serving as magnetic paths to allow increasing the magnetic resistance to the leakage magnetic flux.

In addition, in the present embodiment, since the first magnetic bodies 633x and the second magnetic bodies 633y alternately stacked have the same shape of being merely displaced in the circumferential direction ef, it is possible to manufacture the rotor core 633 using only one component (magnetic body). Therefore, according to the present embodiment, it is possible to suppress an increase in the number of components and suppress an increase in the manufacturing cost of the motor.

Furthermore, in the present embodiment, since the outer peripheral parts 633bc of the two (a pair of) adjacent magnetic pole pieces 633b 1, 633b2 are connected in a staggered manner in the stacking direction, the rotor core 633 as a whole has a substantially columnar shape, and the mechanical strength (annular strength) of the rotor core 633 can be improved.

### Seventh Embodiment

A rotor according to the seventh embodiment being one example of the present invention will be described below.

The rotor according to the seventh embodiment is different from the rotor 3 according to the first embodiment only in a configuration of a rotor core. In the motor 1 illustrated in FIGS. 1 and 2 described in the first embodiment, the rotor according to the present embodiment can be used instead of the rotor 3. Therefore, reference should be made to the motor 1 illustrated in FIGS. 1 and 2 and the description in the first embodiment for the details of the entire configuration, the operation, the application, and the like of the motor using the rotor according to the present embodiment.

The present embodiment is entirely the same as the first embodiment except that a rotor core 733 described below is used instead of the rotor core 33 in the rotor 3 according to the first embodiment. Therefore, for the configuration in the rotor other than the rotor core, reference should be made to the description of the rotor 3 according to the first embodiment.

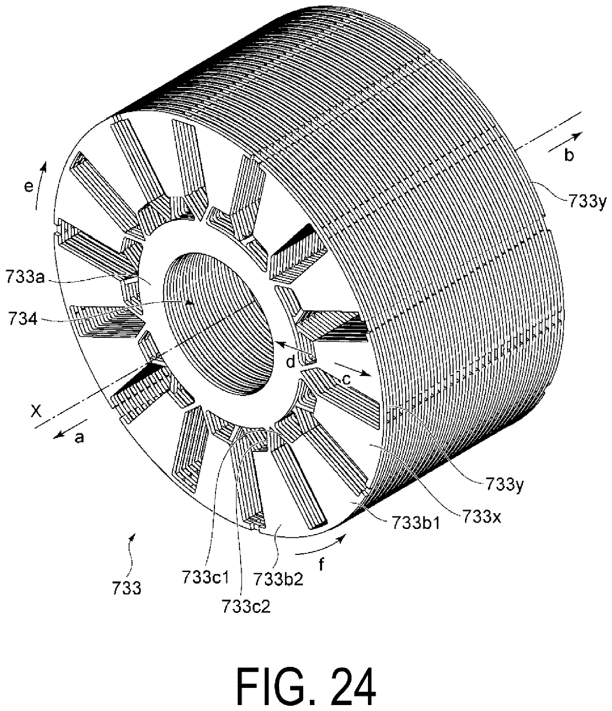

FIG. 24 illustrates a perspective view of the rotor core 733 as one component of the rotor according to the present embodiment.

The rotor core 733 is formed of a stacked body of a plurality of magnetic bodies. Specifically, the plurality of magnetic bodies include a plurality of first magnetic bodies 733x and a plurality of second magnetic bodies 733y. The first magnetic body 733x and the second magnetic body 733y are at positions disposed such that magnetic pole pieces 733b1, 733b2 described later are displaced from one another in the circumferential direction ef, and are actually the same member. The first and second magnetic bodies 733x, 733y are very thin sheets made of metal, such as iron.

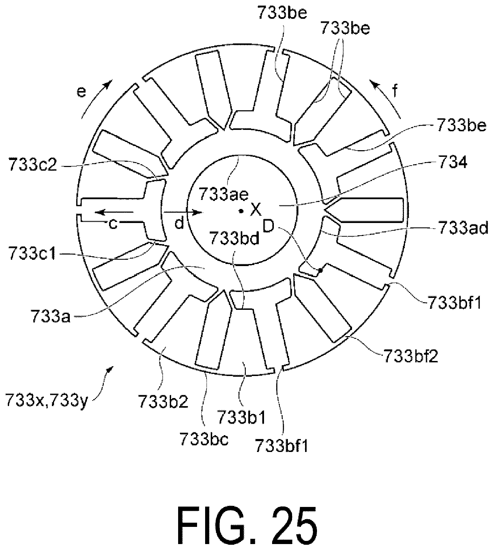

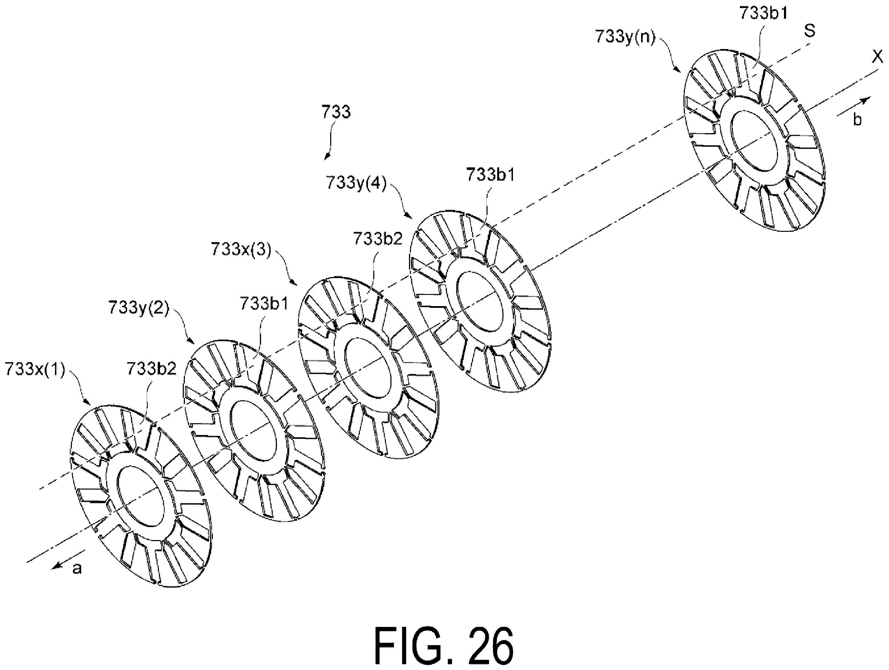

FIG. 25 illustrates a plan view of the first and second magnetic bodies 733x, 733y employed in the rotor core 733. In FIG. 25, the front surface side of the paper surface of the drawing is the upper side a in FIG. 1. Further, FIG. 26 illustrates an exploded perspective view of the rotor core 733 in the rotor according to the present embodiment.

In FIGS. 24 to 26, members having the same configuration and the same function as those of the rotor core 33 according to the first embodiment are denoted by the same alphanumeric symbols as those in the first embodiment under the tens digits of the reference numerals, and "7" is given to the hundreds digits of the reference numerals to indicate the seven hundredth digits. Members having the same alphanumeric symbols as those in the first embodiment below the tens digits of the reference numerals are the same members as those in the first embodiment unless otherwise stated, and the repeated description will be omitted.

In the present embodiment, shapes of coupling parts 733c1, 733c2 coupling the end portions (inner peripheral parts 733bd) at the base point D sides of the plurality of magnetic pole pieces 733b 1, 733b2 and outer peripheral edges 733ad of an annular part 733a are the same as the coupling parts 533c1, 533c2 in the fifth embodiment. Therefore, for the coupling parts 733c1, 733c2, reference should be made to the description of the coupling parts 533c1, 533c2 in the fifth embodiment.

In the present embodiment, as illustrated in FIG. 25, similarly to the sixth embodiment, in the first and second magnetic bodies 733x, 733y, outer peripheral parts 733bc of the two adjacent magnetic pole pieces 733b 1, 733b2 among the plurality of magnetic pole pieces are connected. However, the combination of the magnetic pole pieces 733b 1, 733b2 connected in pairs is different from the sixth embodiment.

That is, in a pair of the magnetic pole pieces 733b 1, 733b2 of the outer peripheral parts 733bc being connected to one another in the present embodiment, a combination is made by each of:
- the magnetic pole piece 733b 1 having a position of a coupling point with the coupling part 733c2 at a "downstream side" in the clockwise direction e of the inner peripheral part 733bd in the "upstream side" in the clockwise direction e; and
- the magnetic pole piece 733b2 having a position of a coupling point with the coupling part 733c1 at an "upstream side" in the clockwise direction e of the inner peripheral part 733bd in the "downstream side" in the clockwise direction e is located.

Similarly to the sixth embodiment, as illustrated in FIG. 25, in the first and second magnetic bodies 733x, 733y, among the plurality of magnetic pole pieces, the two respective adjacent magnetic pole pieces 733b1, 733b2 form a pair, and the outer peripheral parts 733bc are connected. A portion where the outer peripheral parts 733bc are connected to one another is referred to as the "bridge part" in the present embodiment as well and is denoted by a reference numeral "733bf2".

On the other hand, in the circumferential direction ef, the sides opposite to the sides of the magnetic pole pieces 733b 1, 733b2 connected by the bridge parts 733bf2 at the outer peripheral parts 733bc include protruding parts 733bf1 further protruding toward the other adjacent magnetic pole pieces 733b 1, 733b2 similarly to the first, fifth, and sixth embodiments. That is, in the first and second magnetic bodies 733x, 733y, in the circumferential direction ef, the portions of the bridge parts 733bf2 of connecting the outer peripheral parts 733bc of the magnetic pole pieces 733b 1, 733b2 being present and the portions of the protruding parts 733bf1 being opposed to and separated from one another are alternately repeated.

As illustrated in FIG. 26, in the rotor core 733, the first magnetic bodies 733x and the second magnetic bodies 733y are alternately stacked one by one, and a total of n pieces (layers) of both are overlapped and stacked.

The number of stacked magnetic bodies n in the rotor core 733 is an even number, and the half is each of the first magnetic bodies 733x and the second magnetic bodies 733y.

As illustrated in FIG. 26, in the rotor core 733, the odd-numbered layers including the first layer and the third layer are the first magnetic bodies 733x, the even-numbered layers including the second layer and the fourth layer are the second magnetic bodies 733y, the fifth layer to the (n-1)-th layer are not illustrated, and the lowermost n-th layer is the second magnetic body 733y.

As can be seen from the magnetic pole pieces 733b 1, 733b2 for the auxiliary line S to pass through in FIG. 26, the magnetic pole pieces 733b 1 and the magnetic pole pieces 733b2 are in a state of being alternately stacked. Therefore, the coupling parts 733c1, 733c2 in the second magnetic bodies 733y at the even-numbered layers are stacked so as to be located at positions at the coupling parts 733c1, 733c2 being absent in the first magnetic bodies 733x at the odd-numbered layers in the circumferential direction ef.

Therefore, as illustrated in FIG. 24, in the circumferential direction ef, the coupling parts 733c1, 733c2 are located at both sides of the inner peripheral parts 733bd of all the magnetic pole pieces 733b 1, 733b2 in the circumferential direction ef. In addition, the respective coupling parts 733c1, 733c2 are in a state of the coupling parts 733c1 or the coupling parts 733c2 being arranged every other layer in the stacking direction.

Between the outer peripheral parts 733bc of the adjacent magnetic pole pieces 733b 1, 733b2, the portions of the bridge parts 733bf2 being present and the portions of the protruding parts 733bf1 are opposed to and separated from one another are alternately repeated in the stacking direction at the same position in the circumferential direction ef. That is, in the circumferential direction ef, the portions of the outer peripheral parts 733bc being connected by the bridge parts 733bf2 are alternated in the stacking direction.

As illustrated in FIG. 24, in the rotor core 733 obtained by stacking the first and second magnetic bodies 733x, 733y, the stacked body of the magnetic pole pieces 733b 1, 733b2 and the stacked body of the annular parts 733a are coupled by the coupling parts 733c1 and the coupling parts 733c2. Since the outer peripheral parts 733bc of the magnetic pole pieces 733b 1, 733b2 are connected to be alternated in the stacking direction (that is, in a staggered manner), the rotor core 733 as a whole has a substantially columnar shape.

The magnets 31 are disposed between the respective magnetic pole pieces 733b1, 733b2 adjacent to one another in the circumferential direction ef similarly to the first embodiment. The plurality of magnets 31 extend radially from the annular part 733a in the radial direction cd. The magnets 31 are disposed such that the magnetic poles are the same as in the first embodiment.

In the present embodiment, the coupling parts 733c1 and the coupling parts 733c2 provided in the respective first magnetic bodies 733x and second magnetic bodies 733y alternately stacked are at different positions in the circumferential direction ef. Therefore, the respective coupling part 733c1 and coupling part 733c2 are not in contact in the stacking direction, but are separated by one magnetic body (one layer).

That is, the number of stacked magnetic bodies (the number of layers) of each of the coupling parts 733c1 and the coupling parts 733c2 is half the number of stacked magnetic bodies (the number of layers) n of the magnetic pole pieces 733b 1, 733b2 and the annular part 733 a, and magnetic paths becoming ineffective magnetic flux are significantly reduced. In addition, since the coupling part 733c1 and the coupling part 733c2 are divided into very thin film magnetic paths in the stacking direction, a leakage of magnetic flux to the annular part 733a is less likely to occur. Therefore, according to the present embodiment, since the ineffective magnetic flux can be reduced and the effective magnetic flux can be increased, the magnetic flux generated from the magnet 31 can be effectively utilized.

According to the present embodiment, the magnetic flux generated from the magnets 31 can be effectively utilized, and therefore the amount of magnet used can be reduced and cost reduction and weight reduction and size reduction of the motor can be achieved.

Alternatively, with the present embodiment, it is possible to provide a motor having high efficiency and high performance, without reducing or significantly reducing the amount of magnet used, as compared with the conventional configuration.

In addition, although the total thicknesses of the coupling parts 733c1 and the coupling parts 733c2 in the stacking direction (including the gaps between the layers) are substantially the same as in the case of one coupling part, the number of coupling parts is two, and the mechanical strength of the rotor core 733 is high.

In the present embodiment, by extending the coupling parts 733c1 and the coupling parts 733c2 in the oblique direction, it is possible to increase the length of the coupling parts 733c1 and the coupling parts 733c2 serving as magnetic paths to allow increasing the magnetic resistance to the leakage magnetic flux.

In addition, in the present embodiment, since the first magnetic bodies 733x and the second magnetic bodies 733y alternately stacked have the same shape of being merely displaced in the circumferential direction ef, it is possible to manufacture the rotor core 733 using only one component (magnetic body). Therefore, according to the present embodiment, it is possible to suppress an increase in the number of components and suppress an increase in the manufacturing cost of the motor.

Furthermore, in the present embodiment, since the outer peripheral parts 733bc of the two (a pair of) adjacent magnetic pole pieces 733b 1, 733b2 are connected in a staggered manner in the stacking direction, the rotor core 733 as a whole has a substantially columnar shape, and the mechanical strength (annular strength) of the rotor core 733 can be improved.

As described above, the rotor, the motor using the rotor, and the electronic device according to the present invention have been described with reference to the preferred embodiments. However, the rotor, the motor using the rotor, and the electronic device according to the present invention are not limited to the configurations according to the embodiment described above. For example, the ratio between the component in the radial direction cd and the component in the circumferential direction ef in the extending direction of the coupling parts (such as 33c) in the first, second, fifth, six, and seventh embodiments (that is, the degree of inclination, the "formed angle θ" described above) is not limited to the ratio (formed angle θ = 60°) in the illustrated embodiment.

The embodiments have been described with the aspect of the first magnetic bodies (such as 33x) and the second magnetic bodies (such as 33y) being alternately stacked one by one (layer). However, the embodiments are not limited to the described example, and an aspect may be the first magnetic bodies and the second magnetic bodies being alternately stacked two by two (layers), three by three (layers), by the non-constant number by the non-constant number (layers). Obviously, stacking in alternation one by one (layer) is preferred to narrow the magnetic path and reduce a leakage of magnetic flux.

Further, the number of magnetic poles (such as the magnetic pole pieces 33b) of the rotor 3 and the number of slots (the number of teeth parts 43) of the stator 4 are also given merely as examples in the embodiments, and can be appropriately selected and designed in accordance with characteristics, performances, and the like of a target motor.

In addition, the rotor, the motor using the rotor, and the electronic device according to the present invention may be appropriately modified by a person skilled in the art according to known knowledge in the past. Such modifications are of course included in the scope of the disclosure as long as these modifications still include the configuration of the disclosure.

### Reference Signs List

1 Motor, 2 Shaft, 2a, 2b End part, 3 Rotor, 31 Magnet, 31a Inner surface, 31c Outer surface, 31e Side surface, 31n, 31s Magnetic pole face, 32 Gap (flux barrier), 33 Rotor core, 33a Annular part, 33ad Outer peripheral edge, 33ae Inner peripheral edge, 33b Magnetic pole piece, 33bc Outer peripheral part, 33bd Inner peripheral part, 33be Side edge, 33bf Protruding part, 33cx, 33cy Coupling part, 33x First magnetic body, 33y Second magnetic body, 34 Hole part, 35 Second magnet, 4 Stator, 41 Stator core, 42 Coil, 43 Teeth part, 44 Circular ring part, 45 Insulator, 5 Housing, 51 Housing body, 51a Bottom part, 51aa Bearing housing (protruding part), 51b Tube part, 51c Outer peripheral part, 52 Cover, 52a Flat plate part, 52aa Bearing housing (protruding part), 52c Outer peripheral part, 233 Rotor core, 233a Annular part, 233ad Outer peripheral edge, 233ae Inner peripheral edge, 233b1, 233b2 Magnetic pole piece, 233bc Outer peripheral part, 233bd Inner peripheral part, 233be Side edge, 233bf1 Protruding part, 233bf2 Bridge part, 233cx, 233cy Coupling part, 233x First magnetic body, 233y Second magnetic body, 234 Hole part, 333 Rotor core, 333a Annular part, 333ad Outer peripheral edge, 333ae Inner peripheral edge, 333b Magnetic pole piece, 333bc Outer peripheral part, 333bd Inner peripheral part, 333be Side edge, 333bf Protruding part, 333cx, 333cy Coupling part, 333cx-d, 333cy-d First coupling part, 333cx-c, 333cy-c Second coupling part, 333x First magnetic body, 333y Second magnetic body, 334 Hole part, 433 Rotor core, 433a Annular part, 433ad Outer peripheral edge, 433ae Inner peripheral edge, 433b1, 433b2 Magnetic pole piece, 433bc Outer peripheral part, 433bd Inner peripheral part, 433be Side edge, 433bf Protruding part, 433c Coupling part, 433c-d First coupling part, 433c-cf Second coupling part, 433c-ce Third coupling part, 433x First magnetic body, 433y Second magnetic body, 434 Hole part, 533 Rotor core, 533a Annular part, 533ad Outer peripheral edge, 533ae Inner peripheral edge, 533b1, 533b2 Magnetic pole piece, 533bc Outer peripheral part, 533bd Inner peripheral part, 533be Side edge, 533bf Protruding part, 533c1, 533c2 Coupling part, 533x First magnetic body, 533y Second magnetic body, 534 Hole part, 633 Rotor core, 633a Annular part, 633ad Outer peripheral edge, 633ae Inner peripheral edge, 633b1, 633b2 Magnetic pole piece, 633bc Outer peripheral part, 633bd Inner peripheral part, 633be Side edge, 633bf1 Protruding part, 633bf2 Bridge part, 633c1, 633c2 Coupling part, 633x First magnetic body, 633y Second magnetic body, 634 Hole part, 733 Rotor core, 733a Annular part, 733ad Outer peripheral edge, 733ae Inner peripheral edge, 733b1, 733b2 Magnetic pole piece, 733bc Outer peripheral part, 733bd Inner peripheral part, 733be Side edge, 733bf1 Protruding part, 733bf2 Bridge part, 733c1, 733c2 Coupling part, 733x First magnetic body, 733y Second magnetic body, 734 Hole part, D Base point

## Claims

1. A rotor comprising:
a plurality of magnetic bodies stacked in an axial direction; and
a plurality of magnets, wherein
the magnetic body includes
an annular part,
a plurality of magnetic pole pieces extending in a radial direction, and
a plurality of coupling parts configured to couple each of the plurality of magnetic pole pieces and the annular part,
the plurality of magnets are each disposed between two adjacent magnetic pole pieces among the plurality of magnetic pole pieces in a circumferential direction, and
the coupling part extends with both components including a component in the radial direction and a component in the circumferential direction.

2. The rotor according to claim 1, wherein
the plurality of magnetic bodies include a plurality of first magnetic bodies and a plurality of second magnetic bodies; and
the coupling part of the first magnetic body is at a position different from the coupling part of the second magnetic body in the circumferential direction.

3. The rotor according to claim 2, wherein
a gap surrounded by the coupling part of the first magnetic body, the coupling part of the second magnetic body, the magnetic pole piece, and the annular part is formed extending in the axial direction.

4. The rotor according to claim 2 or 3, wherein
an extending direction of the coupling part of the first magnetic body is different from an extending direction of the coupling part of the second magnetic body.

5. The rotor according to any one of claims 1 to 4, wherein
outer peripheral parts of two adjacent magnetic pole pieces among the plurality of magnetic pole pieces are coupled.

6. The rotor according to any one of claims 2 to 5, wherein
the first magnetic bodies and the second magnetic bodies are alternately stacked.

7. The rotor according to claim 6, wherein
the first magnetic body and the second magnetic body after inverted have a same shape.

8. The rotor according to claim 6, wherein
the first magnetic body and the second magnetic body have a same shape; and
the coupling parts of the stacked first magnetic bodies and the coupling parts of the stacked second magnetic bodies are at positions displaced from one another in the circumferential direction.

9. A motor comprising:
the rotor according to any one of claims 1 to 8;
a shaft fixed to the rotor; and
a stator including a coil and a magnetic body wound around with the coil.

10. An electronic device comprising
the motor according to claim 9.
